# EUROPÄISCHE PATENTSCHRIFT

(11) **EP 3 516 255 B1**
(45) Veröffentlichungstag und Bekanntmachung des Hinweises auf die Patenterteilung: **25.05.2022**
(21) Anmeldenummer: 17772016.6
(22) Anmeldetag: 18.09.2017
(51) Int. Cl.: F16D 55/226, F16D 65/092, F16D 65/097

(54) **SCHEIBENBREMSE FÜR EIN NUTZFAHRZEUG UND BREMSBELAGSATZ**
DISC BRAKE FOR A UTILITY VEHICLE, AND BRAKE PAD SET
FREIN À DISQUE POUR VÉHICULE UTILITAIRE ET JEU DE GARNITURES DE FREIN

(30) Priorität: 21.09.2016 DE 102016117777
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: MOLNAR, Markus, 94081 Fürstenzell (DE); NESMJANOWITSCH, Igor, 94491 Hengersberg (DE); HAUSER, Maximilian, 94081 Fürstenzell (DE); BRANDL, Christian, 94447 Plattling (DE); HEINDL, Martin, 94535 Eging am See (DE); PLEINTINGER, Martin, 94428 Eichendorf (DE)
(86) Internationale Anmeldenummer: PCT/EP2017/073446
(87) Internationale Veröffentlichungsnummer: WO 2018/054825

(56) Entgegenhaltungen:
- DE-A1- 19 623 867
- DE-A1-102012 102 584
- DE-U1-202016 102 686
- US-A1- 2013 025 981
- US-A1- 2014 367 208

## Beschreibung

Die Erfindung betrifft eine Scheibenbremse für ein Nutzfahrzeug nach dem Oberbegriff des Anspruchs 1 oder 11.

. Die Erfindung bezieht sich auch auf einen Bremsbelagsatz.

Bei einer gattungsgemäßen, auch als Schiebesattel-Bremse (oder auch Schwimmsattelbremse) bekannten Scheibenbremse wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Nach einem Lösen der Bremse verbleibt bei der bekannten Scheibenbremse der Bremssattel in dieser Position, in der die Bremsbeläge, zumindest aber der reaktionsseitige Bremsbelag zwar drucklos, jedoch schleifend an der Bremsscheibe anliegt. Die dadurch im Fahrbetrieb auftretenden Restschleifmomente der Bremsbeläge wirken sich insofern nachteilig aus als sie zu einem erhöhten Kraftstoffverbrauch führen ebenso wie zu einer Verringerung der Standzeit der beteiligten Bauteile, nämlich der Bremsscheibe und der Bremsbeläge.

Zwar erfolgt ein geringes Lösen der Bremsbeläge im Fahrbetrieb beispielsweise durch einen Taumelschlag der Bremsscheibe sowie durch Erschütterungen und Querbeschleunigungen bei Kurvenfahrten. Diese Effekte sind jedoch nicht ausreichend, um die genannten Restschleifmomente wirksam zu verhindern. Ebenso können diese Effekte nach einem Lösen der Bremsbeläge von der Bremsscheibe erneut zu einem Anliegen der Bremsbeläge an der Bremsscheibe führen, wodurch wiederum ein Restschleifmoment entstehen kann.

Um diesem Problem zu begegnen, ist in der gattungsgemäßen DE 10 2007 001 213 eine Scheibenbremse offenbart mit einer Rückstelleinrichtung, die in einem der Führungsholme, über die der Bremssattel verschiebbar am Bremsträger gehalten ist, angeordnet ist und die ein federndes Rückstellelement aufweist, durch das der Bremssattel in eine Ausgangsstellung verschoben wird.

Prinzipiell hat sich diese Konstruktion bewährt. Jedoch kann der Einsatz dieser bekannten Rückstelleinrichtung bei druckluftbetätigten Scheibenbremsen schwerer Nutzfahrzeuge zu Problemen führen, da hier weite Grenzen variabler Einflüsse durch Bauteiltoleranzen und Bauteildeformationen wirksam sind, die eine sichere Funktion dieser Rückstelleinrichtung nicht in jedem Fall zulassen.

Vergleichbare Probleme ergeben sich bei einer Scheibenbremse wie sie in der DE 10 2012 006 111 A1 thematisiert ist. Dabei ist eine Rückstelleinrichtung auf der der Zuspanneinrichtung gegenüberliegenden, dem reaktionsseitigen Bremsbelag zugewandten Seite angeordnet, wodurch eine wirksame, insbesondere automatische Rückstellung des Bremssattels erreicht wird, bei gleichzeitig minimalstem Eingriff in die Systemsteifigkeit.

In jedem Fall wirkt die Rückstelleinrichtung auf den Bremssattel, wobei der Bremsträger als Widerlager fungiert.

Die DE 43 01 621 A1 beschreibt eine Schwimmsattel-Scheibenbremse mit einem ortsfesten Bremsträger, der zwei über den äußeren Rand einer Bremsscheibe ragende Trägerarme aufweist, mit beiderseits der Bremsscheibe angeordneten, je einen Reibbelag und eine Rückenplatte aufweisenden Bremsbacken, die an den Trägerarmen verschiebbar abgestützt sind, mit einem am Bremsträger axial verschiebbar geführten Schwimmsattel, der die Bremsbacken umgreift und einen zum Andruck der Bremsbacken an die Bremsscheibe bestimmte Betätigungsvorrichtung aufweist, mit einer auf die Bremsbacken axial in Bremslöserichtung einwirkenden Federanordnung, die nach dem Bremsen das Einstellen eines Lüftspiels zwischen Bremsbacken und Bremsscheibe unterstützt. Die Federanordnung weist zumindest eine Spreizfeder auf, die an einem Trägerarm des Bremsträgers in axialer Richtung insgesamt unverschiebbar befestigt ist, dass die Befestigung an einem über dem äußeren Rand der Bremsscheibe befindlichen Abschnitt des Trägerarms erfolgt, und dass die Spreizfeder zumindest zwei Federarme aufweist, die an den Rückplatten der Bremsbacken in axialer Richtung federnd anliegen.

Die US2014/0339026 A1 beschreibt eine Spreizfeder, umfassend einen Verriegelungsarm, der die Spreizfeder mit einem Bremskomponente verbindet, einen Rückzugarm; und eine Vorspanneinrichtung, die zwischen dem Verriegelungsarm und dem Rückholarm angeordnet ist, wobei die Vorspannvorrichtung sechs spiralförmige Schleifen oder mehr umfasst, die Energie während einer Bremsenaktivierung speichern und sobald der Bremsvorgang abgeschlossen ist, die Bremskomponenten (Bremsbelag) zurückziehen. Es wird ein Bremssattel in Form eines Faustsattels, welcher kein Schiebesattel ist, angegeben. Dieser ist für ein Personenfahrzeug geeignet, jedoch nicht für ein Nutzfahrzeug.

Die US 2013/025981 A1) betrifft eine Struktur, bei der es möglich ist, bei der Montage von Belagklammern Rückholfedern und die Belagklammern als integrale Bauteile zu handhaben, was die Montage erleichtert. An beiden axialen Enden jeder der Belagklammern sind Halteabschnitte vorgesehen. Darüber hinaus bestehen die Rückstellfedern aus inneren Federelementen und äußeren Federelementen. Bei diesen beiden Arten von Federelementen handelt es sich um schraubenförmige Torsionsfedern mit schraubenförmigen Profilen. An den Federelementen sind jeweils Abstützabschnitte vorgesehen. Die angrenzenden Abschnitte werden durch elastische Rückstellkräfte gegen die Innenflächen der begrenzenden Abschnitte gedrückt. Darüber hinaus sind die Mittelachsen der schraubenförmigen Wicklungsabschnitte im Wesentlichen in Drehrichtung des Rotors ausgerichtet.

DE 20 2016 102686 U1 beschreibt eine Scheibenbremse für ein Nutzfahrzeug, mit einem eine Bremsscheibe übergreifenden, als Schiebesattel ausgebildeten Bremssattel, der an einem ortsfesten Bremsträger befestigt ist und eine zentrale Öffnung über der Bremsscheibe aufweist, zwei im Bremssattel angeordneten, gegensinnig bewegbaren, jeweils eine Belagträgerplatte und einen darauf befestigten Reibbelag aufweisenden Bremsbelägen, von denen ein aktionsseitiger mittels einer Zuspanneinrichtung über mindestens einen Bremsstempel gegen die Bremsscheibe pressbar ist, sowie mindestens einer Rückstelleinrichtung, mit der der Bremssattel nach einem bremsbedingten Verschieben und Lösen der Bremse rückführbar ist, wobei die Rückstelleinrichtung eine an den sich gegenüberliegenden Bremsbelägen angreifenden, entgegen der jeweiligen Zuspannrichtung gleich wirkenden Spreizeinrichtung mit an der jeweiligen Belagträgerplatte angreifenden federnden Spreizelementen aufweist. Die Spreizeinrichtung ist in der zentralen Öffnung angeordnet, wobei die Spreizelemente direkt oder indirekt außerhalb der Reibbeläge einseitig im Mittenbereich oder an mindestens zwei zur Mitte abständig zueinander angeordneten Anlagebereichen der Bremsbeläge angreifen, wobei die Anlagebereiche jeweils eine Anlagefläche und eine Auflagefläche aufweisen, an welchen die Spreizelemente bewegbar angeordnet sind.

DE 10 2012 102584 A1 betrifft eine Scheibenbremse, insbesondere für ein Kraftfahrzeug, mit einer Zuspannvorrichtung, einem eine Bremsscheibe übergreifenden Bremssattel, insbesondere Schiebesattel, vorzugsweise einer Belagverschleißnachstellvorrichtung, einem Bremsträger mit in Umfangsrichtung der Bremsscheibe gegenüberliegenden Führungsflächen, wobei zwischen den Führungsflächen zuspannseitig und rückseitig der Bremsscheibe jeweils mindestens ein Bremsbelag mit einem Belagträger und mindestens einem Reibbelag parallel zu einer Drehachse der Bremsscheibe verschiebbar geführt und von einer Zuspannkraft betätigbar ist, und mit mindestens einer Rückstelleinrichtung, welche zumindest den rückseitigen Bremsbelag mit dem Belagträger an dem Bremsträger abstützt, wobei die Rückstelleinrichtung mindestens zwei Rückstellelemente umfasst, die parallel zur Drehachse der Bremsscheibe verschiebbar geführt an dem Belagträger zumindest des rückseitigen Bremsbelags angebracht sind.

DE 196 23 867 A1 beschreibt eine Vorrichtung zur azimutalen Abstützung eines Bremsbelaghalters und eines hieran befestigten Bremsbelags einer Scheibenbremse, wobei sich der Bremsbelaghalter bei Einleitung des Bremsvorgangs in Richtung einer Bremsscheibe bewegt und die dabei in Umfangsrichtung der Bremsscheibe vom Bremsbelag auf den Bremsbelaghalter übertragenen Kräfte durch wenigstens ein separates Bauteil abgestützt werden. Das Bauteil zeichnet sich dadurch aus, dass es bei Einleitung des Bremsvorgangs eine Kippbewegung relativ zum Bremsbelaghalter und zum Bremssattel, mindestens in Axialrichtung der Bremsscheibe, durchführen kann.

Der Erfindung liegt die Aufgabe zugrunde, eine Scheibenbremse der gattungsgemäßen Art so weiterzuentwickeln, dass mit konstruktiv einfachsten Mitteln die Standzeit insbesondere der Bremsbeläge und der Bremsscheibe erhöht und die Betriebskosten insgesamt gesenkt werden.

Eine weitere Aufgabe besteht darin, einen entsprechenden Bremsbelagsatz bereitzustellen.

Diese Aufgabe wird durch eine Scheibenbremse mit den Merkmalen der unabhängigen Ansprüche 1 und 11 gelöst.

Die weitere Aufgabe wird durch Bremsbelagsätze mit den Merkmalen der Ansprüche 22, 24, 25 und 26 gelöst.

Eine erfindungsgemäße Scheibenbremse für ein Nutzfahrzeug, mit einem eine Bremsscheibe übergreifenden, als Schiebesattel ausgebildeten Bremssattel, der an einem ortsfesten Bremsträger befestigt ist und eine zentrale Öffnung über der Bremsscheibe aufweist, zwei im Bremssattel angeordneten, gegensinnig bewegbaren, jeweils eine Belagträgerplatte und einen darauf befestigten Reibbelag aufweisenden Bremsbelägen, von denen ein aktionsseitiger bzw. zuspannseitiger Bremsbelag, mittels einer Zuspanneinrichtung über mindestens einen Bremsstempel gegen die Bremsscheibe pressbar ist, sowie mindestens einer Rückstelleinrichtung, mit welcher die Bremsbeläge nach einem bremsbedingten Verschieben und Lösen der Bremse rückführbar sind, ist so ausgebildet, dass die Rückstelleinrichtung mindestens ein an einem Bremsbelag angebrachtes Rückstellelement aufweist, das zwischen diesem Bremsbelag und einer ortsfesten Referenz angeordnet ist und auf den Bremsbelag eine Rückstellkraft ausübt.

Zusätzlich zu einer Referenz an ein ortsfestes Bauteil (in diesem Fall der Bremsträger) sind Rückstellelemente auch zwischen den Bremsbelägen und ortsungebundenen/ axial verschiebbaren Bauteilen (z.B. Bremssattel oder Belaghaltebügel) möglich. Diese gewährleisten ein Positionieren der Bremsbeläge zu dem verschiebbaren Bremssattel in Schwimmsattelausführung. Eine der Referenzen an dem Bremssattel kann z.B. dessen Bodenplatte sein.

Durch die erfindungsgemäße Ausgestaltung der Scheibenbremse wird eine synchrone Rückstellung beider Bremsbeläge sowie einer Rückstellung des Bremssattels bei gelöster Bremse erreicht, wobei die Synchronität sowohl die Rückstellkräfte wie auch die Rückstellwege betrifft. Dabei wirkt eine Rückstellkraft entgegen der jeweiligen Zuspannrichtung der beiden Bremsbeläge, also beim reaktionsseitigen (rückenseitigen) Bremsbelag zum Sattelrücken hin und beim aktionsseitigen (zuspannseitigen) Bremsbelag zum Sattelkopf (der auch als Zuspannabschnitt bezeichnet wird), z.B. zu dem/den Druckstück/Druckstücken der Zuspanneinrichtung, hin, unter Spaltbildungen, d.h. Lüftspiel, gegenüber der Bremsscheibe. Das insgesamt vorgesehene Lüftspiel kann somit durch die Rückstelleinrichtung symmetrisch zu der Bremsscheibe eingestellt werden.

Das mindestens eine Rückstellelement ist als eine spezielle Feder ausgestaltet, die nach jeder Bremsbetätigung den jeweiligen Bremsbelag aktiv von der Bremsscheibe wegbewegt und auf diese Weise zurückstellt. So kann ein Restschleifmoment, welches bei einer nach Lösen der Bremse verbleibenden Berührung von Bremsscheibe und Bremsbelag entstehen kann, verhindert werden.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine schematische Perspektivansicht eines Ausführungsbeispiels einer erfindungsgemäßen Scheibenbremse mit einer Rückstelleinrichtung;
- Figuren 2-3: schematische Perspektivansichten eines Bremsträgers mit Bremsbelägen und Rückstellelementen der Rückstelleinrichtung der Scheibenbremse nach Figur 1;
- Figuren 4-5: schematische Perspektivansichten der Bremsbeläge nach Figur 2-3;
- Figuren 6-7: schematische Perspektivansichten eines Bremsträgers mit Bremsbelägen und einer Variante der Rückstelleinrichtung;
- Figur 8: eine schematische Perspektivansicht der Scheibenbremse nach Figur 1 mit der Variante der Rückstelleinrichtung nach Figuren 6-7;
- Figur 9: eine schematische Teilschnittansicht der Scheibenbremse nach Figur 8;
- Figur 9a: eine vergrößerte Schnittansicht der Anbindung des Bremssattels mit einem Lagerabschnitt an dem Bremsträger nach Figur 9;
- Figur 10: eine schematische Perspektivansicht eines Haltebügels der Rückstelleinrichtung mit einer Spreizeinrichtung;
- Figur 11: eine schematische Perspektivansicht eines Haltebügels der Rückstelleinrichtung;
- Figur 12: eine schematische Perspektivansicht einer weiteren Variante der Rückstelleinrichtung nach Figur 7;
- Figur 13: eine vergrößerte schematische Perspektivansicht einer Rückstelleinheit der Variante der Rückstelleinrichtung nach Figur 12;
- Figur 14: eine schematische Schnittansicht eines weiteren Ausführungsbeispiels einer Scheibenbremse mit einer anderen Variante der Rückstelleinrichtung; und
- Figuren 15-16: schematische Perspektivansichten des weiteren Ausführungsbeispiels nach Figur 14.

Die Begriffe "oben", "unten", "links", "rechts" beziehen sich auf die jeweilige Anordnungen in den Figuren.

Eine "Oberseite" und eine "Unterseite" eines Bremsbelags 3, 3' bzw. einer Belagträgerplatte 4 beziehen sich immer auf die Einbausituation des jeweiligen Bremsbelags 3, 3'. Dabei liegt die Unterseite des jeweiligen Bremsbelags 3, 3' in radialer Richtung näher an einer Bremsscheibendrehachse 2a einer Bremsscheibe 2 als die Oberseite dieses Bremsbelags 3, 3'.

Mit dem Begriff "Querachse" des Bremsbelags 3, 3' ist eine gedachte Achse gemeint, welche im eingebauten Zustand des Bremsbelags 3, 3' radial zu der Bremsscheibendrehachse 2a verläuft. Ein "Längsachse" des Bremsbelags 3, 3' verläuft somit rechtwinklig zu der Querachse und tangential zu der Bremsscheibe 2.

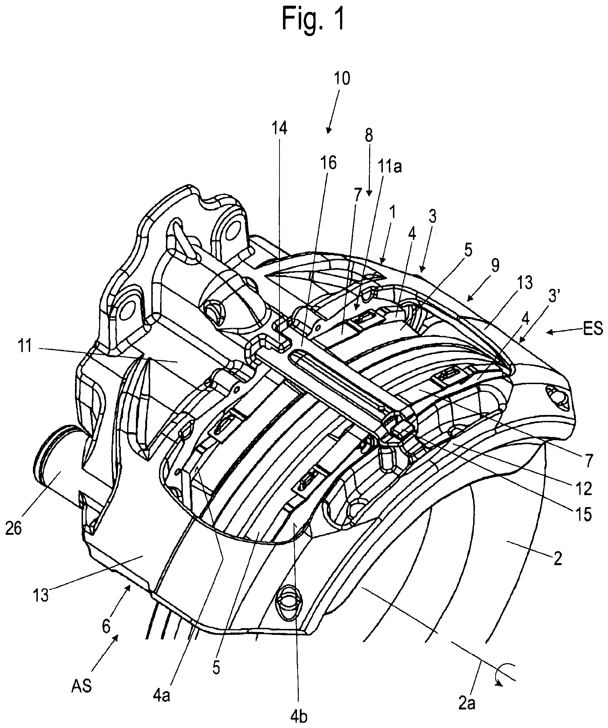

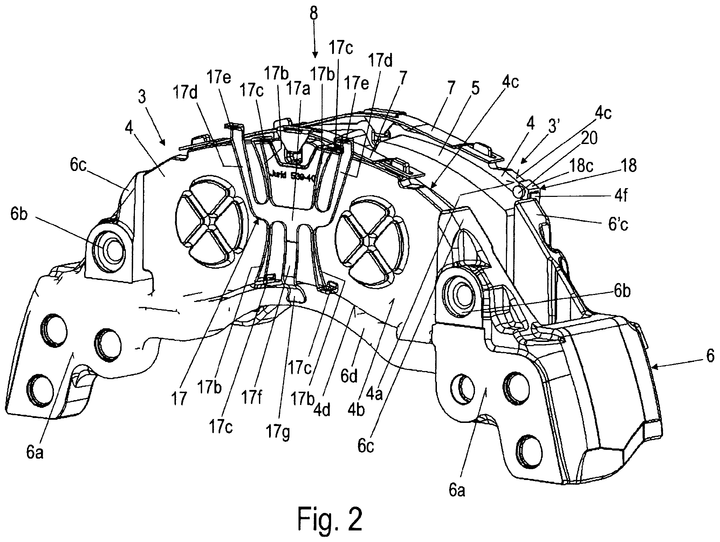

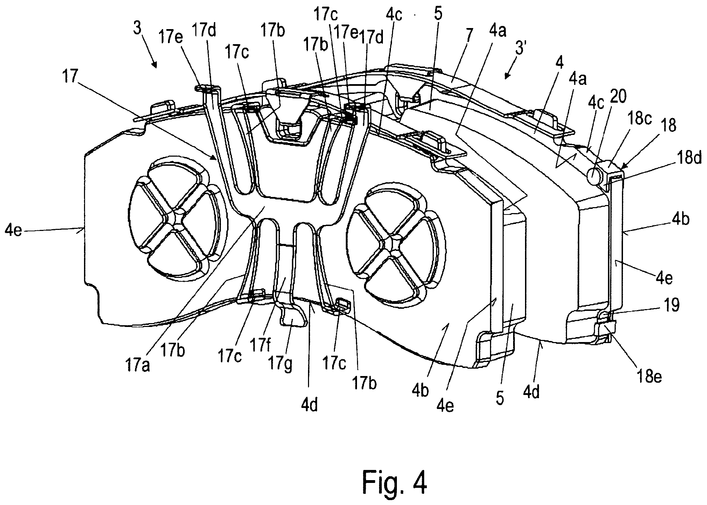

**Figur** 1 zeigt eine schematische Perspektivansicht eines Ausführungsbeispiels einer erfindungsgemäßen Scheibenbremse 10 mit einer Rückstelleinrichtung 8. In den **Figuren 2-3** sind schematische Perspektivansichten eines Bremsträgers 6 mit Bremsbelägen 3, 3' und Rückstellelementen 17, 18 der Rückstelleinrichtung 8 der Scheibenbremse 10 nach Figur 1 dargestellt. **Figuren 4-5** zeigen schematische Perspektivansichten der Bremsbeläge 3, 3' nach Figuren 2-3.

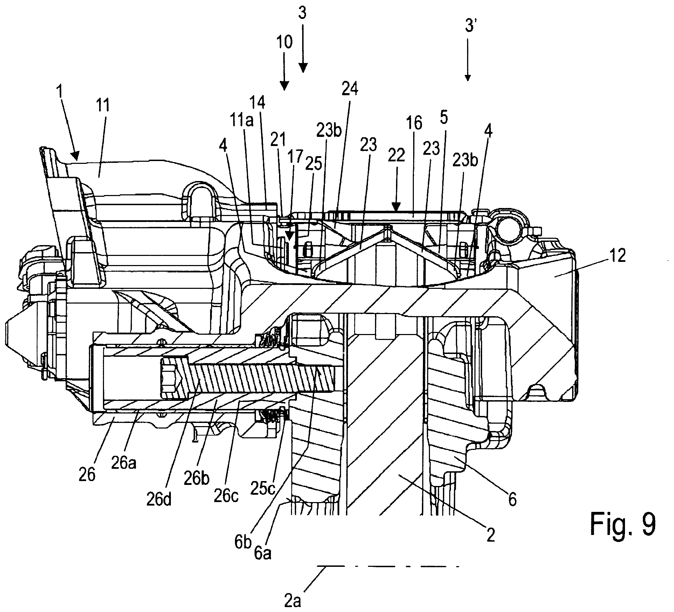

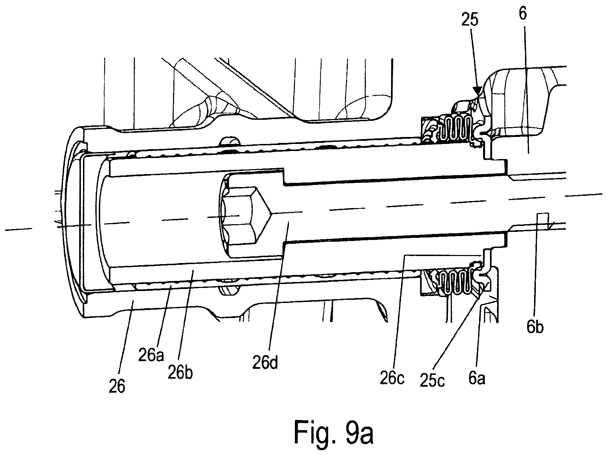

Ein Bremssattel 1 übergreift eine Bremsscheibe 2 mit einer Bremsscheibendrehachse 2a. Der Bremssattel 1 ist als ein so genannter Schiebesattel bezogen auf die Bremsscheibe 2 axial in Richtung der Bremsscheibendrehachse 2a verschiebbar an einem Bremsträger 6 angebracht. Hierzu ist der Bremssattel 1 mit Lagerabschnitten 26 auf Führungsholmen 26b (siehe Figur 9) axial verschiebbar gelagert, die mit dem ortsfest am Fahrzeug gehaltenen Bremsträger 6 verbunden sind.

Der Bremssattel 1 umfasst einen Zuspannabschnitt 11, einen Sattelrücken 12 und zwei Zugstreben 13. Der Zuspannabschnitt 11 verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 12 angeordnet. Der Sattelrücken 12 ist mit dem Zuspannabschnitt 11 an jeweils einem Ende mit jeweils einer Zugstrebe 13 verbunden. Die Zugstreben 13 verlaufen dabei im Wesentlichen rechtwinklig zum Zuspannabschnitt 11 und zum Sattelrücken 12.

Der Zuspannabschnitt 11 weist einen Innenraum auf, in welchem eine nicht gezeigte Zuspanneinrichtung der Scheibenbremse 10 angeordnet ist. Eine Öffnung des Innenraums weist zur Bremsscheibe 2 und ist mit einer Platte, die als Bodenblech 11a bezeichnet wird, verschlossen (am besten zu erkennen in Figur 9).

Der Zuspannabschnitt 11, der Sattelrücken 12 und die Zugstreben 13 legen in dieser Anordnung eine zentrale Öffnung 9 zwischen sich fest, welche die Bremsscheibe 2 überspannt. Die Öffnung 9 weist eine gedachte Längsmittellinie auf, welche in der Ebene der Bremsscheibe 2 liegt und die gedachten Mitten der Zugstreben 13 verbindet. Außerdem weist die Öffnung 9 eine weitere gedachte Quermittellinie auf, welche eine gedachte Mitte des Zuspannabschnitts 11 eine gedachte Mitte des Sattelrückens 12 verbindet. Die Längsmittellinie und die Quermittellinie schneiden sich in einem gedachten Mittelpunkt, welcher hier als virtuelle Mitte der Öffnung 9 bezeichnet wird.

Beiderseits der Bremsscheibe 2 ist jeweils ein Bremsbelag 3, 3' angeordnet. Der zwischen der Bremsscheibe 2 und dem Zuspannabschnitt 11 des Bremssattels 1 angeordnete Bremsbelag 3 wird als aktionsseitiger oder auch zuspannseitiger Bremsbelag bezeichnet. Der andere Bremsbelag 3' ist zwischen der Bremsscheibe 2 und dem Sattelrücken 12 angeordnet und wird als rückenseitiger oder auch reaktionsseitiger Bremsbelag 3' bezeichnet und durch das Bezugszeichen 3' von dem zuspannseitigen Bremsbelag 3 unterschieden.

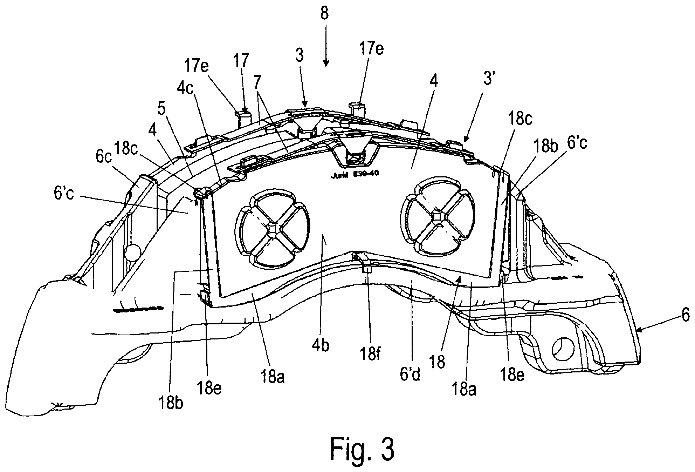

Die Rückstelleinrichtung 8 weist hier zwei Rückstellelemente 17, 18 auf, von denen das Rückstellelement 17 zwischen dem zuspannseitigen Bremsbelag 3 und dem Zuspannabschnitt 11 angeordnet ist. Das andere Rückstellelement 18 ist zwischen dem rückenseitigen Bremsbelag 3' und dem Sattelrücken 12 angeordnet. Die Rückstellelemente 17, 18 sind in Figur 1 durch die umgebenden Bauteile verdeckt und am besten in den Figuren 2 und 3 zu erkennen. Figur 1 dient in erster Linie der Übersicht und Anordnung der Bauteile der Scheibenbremse 10.

**Figur** 2 zeigt den Bremsträger 6 mit dem zuspannseitigen Bremsbelag 3. Die gezeigte Seite des Bremsträgers 6, welche zu dem Zuspannabschnitt 11 des Bremssattels 1 weist, wird als Befestigungsseite 6a bezeichnet. Der Bremsträger 6 ist mit seiner Befestigungsseite 6a an einem ortsfesten Teil eines zugeordneten Fahrzeugs befestigt. Die Befestigungsseite 6a ist zudem mit zwei Lageraufnahmen 6b für die Führungsholme 26b (siehe Figur 9) versehen.

In **Figur 3** ist der Bremsträger 6 von der anderen Seite her gesehen mit dem rückenseitigen Bremsbelag 3' dargestellt.

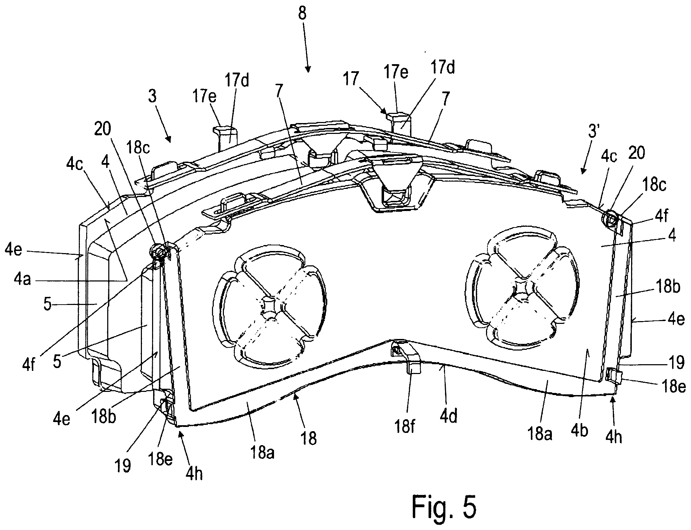

Der zuspannseitige Bremsbelag 3 ist in **Figur** 4 mit seiner Druckseite 4b vergrößert dargestellt, wobei **Figur 5** den rückenseitigen Bremsbelag 3' von seiner Druckseite 4b her gesehen vergrößert zeigt.

Jeder Bremsbelag 3, 3' weist eine Belagträgerplatte 4 und einen auf der der Bremsscheibe 2 zugewandten Seite daran befestigten Reibbelag 5 auf einer Belagseite 4a auf, der in Funktion, also bei einer Bremsung, gegen die Bremsscheibe 2 gepresst ist. Die andere Seite der Belagträgerplatte 4 wird im Weiteren als Druckseite 4b bezeichnet. So steht der zuspannseitige Bremsbelag 3 mit seiner Druckseite 4b mit der Zuspanneinrichtung der Scheibenbremse 10 in Wirkverbindung, wobei die Druckseite 4b des rückenseitigen Bremsbelags 3' mit der Innenseite des Sattelrückens 12 des Bremssattels 1 in Kontakt steht.

Die Belagträgerplatten 4 der Bremsbeläge 3, 3' weisen jeweils eine Oberseite 4c, eine Unterseite 4d und zwei Seitenflächen 4e (siehe Figuren 4-5) auf.

In dem Bremsträger 6 sind die Bremsbeläge 3, 3' in so genannten Belagschächten zwischen jeweils zwei Bremsträgerhörnern 6c, 6'c angeordnet und liegen mit Abschnitten ihrer Unterseiten 4d auf jeweiligen Auflagen (nicht bezeichnet) eines jeweiligen Belagschachtbodens des Bremsträgers 6 auf. Der Belagschachtboden ist jeweils durch einen Brückenbogen 6d, 6'd des Bremsträgers 6 gebildet.

Die Bremsbeläge 3, 3' sind im Fall einer Bremsung beidseitig an die Bremsscheibe 2 anpressbar. Die Bremsbeläge 3, 3' sind durch die zentrale Öffnung 9 für einen Wechsel und zur Wartung erreichbar. Sie können durch diese zentrale Öffnung 9 in ihre zugehörigen Belagschächte eingesetzt und wieder daraus entnommen werden.

Ein Drehpfeil um die Bremsscheibendrehachse 2a in Figur 1 deutet eine Hauptdrehrichtung für Vorwärtsfahrt des Fahrzeugs, dem die Scheibenbremse 10 zugeordnet ist, an. In Bezug auf die Hauptdrehrichtung der Bremsscheibe 2 sind an der Scheibenbremse 10 eine Einlaufseite ES und gegenüberliegend eine Auslaufseite AS festgelegt. Dementsprechend werden die Bremsträgerhörner 6c, 6'c an der Einlaufseite ES einlaufseitige Bremsträgerhörner 6c, 6'c und an der Auslaufseite AS auslaufseitige Bremsträgerhörner 6c, 6'c genannt.

Ein Belaghaltebügel 16 ist über den Bremsbelägen 3, 3' in Querrichtung der Öffnung 9 bzw. in Richtung der Bremsscheibendrehachse 2a zwischen dem Zuspannabschnitt 11 und dem Sattelrücken 12 angeordnet. Ein zuspannseitiges Halteende des Belaghaltebügels 16 ist in einem Halteabschnitt 14 an dem Zuspannabschnitt 11 des Bremssattels 1 befestigt, wobei ein gegenüberliegendes, rückenseitiges Halteende des Belaghaltebügels 16 an einem Halteabschnitt 15 des Sattelrückens 12 festgelegt ist.

Der Belaghaltebügel 16 drückt hier mit Abschnitten seiner Unterseite auf Klammerelemente (nicht bezeichnet) beider Bremsbeläge 3, 3' und somit auch auf deren Belaghaltefedern 7, wodurch die Bremsbeläge 3, 3' in ihren Belagschächten gehalten werden (siehe Figur 9) Die Belaghaltefedern 7 sind jeweils an den Belagträgerplatten 4 an Vorsprüngen gehalten.

Die Bremsung erfolgt mittels der im Zuspannabschnitt 11 des Bremssattels 1 dort in einem Aufnahmeraum angeordneten Zuspanneinrichtung, z.B. mit einem Bremshebel, der in einem Dom des Bremssattels 1 positioniert ist. Der zuspannseitige Bremsbelag 3 kontaktiert zunächst bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 3', bis dieser gleichfalls an der Bremsscheibe 2 reibend zur Anlage kommt.

Nach einem Lösen der Bremse werden die beiden sich gegenüberliegenden Bremsbeläge 3, 3' mittels der Rückstelleinrichtung 8 so weit von der Bremsscheibe 2 gelöst, dass diese gegenüber den Bremsbelägen 3, 3' frei läuft.

Dabei übt die Rückstelleinrichtung 8 auf jeden Bremsbelag 3, 3' eine Kraft aus, die im Weiteren Rückstellkraft genannt wird, welche den jeweiligen Bremsbelag 3, 3' in Richtung der Bremsscheibendrehachse 2a von der Bremsscheibe 2 weg bewegt. Mit anderen Worten, der zuspannseitige Bremsbelag 3 wird von der Bremsscheibe 2 in Gegenrichtung einer Zuspannkraft der Zuspanneinrichtung auf den Zuspannabschnitt 11 des Bremssattels 1 verschoben, wobei der rückenseitige Bremsbelag 3' von der Bremsscheibe 2 in zu dem zuspannseitigen Bremsbelag 3 entgegengesetzter Bewegungsrichtung zusammen mit dem Bremssattel 1 verschoben wird.

Die Rückstellkraft der Rückstelleinrichtung 8 wird durch ein oder mehrere Kraftspeicherelemente erzeugt. Diese Kraftspeicherelemente sind hier als Federelemente ausgebildet, welche zwischen dem jeweiligen Bremsbelag 3, 3' und einer ortsfesten Referenz vorgespannt angebracht sind. Unter der ortsfesten Referenz sind Bauteile der Scheibenbremse 10 zu verstehen, welche ortsfest mit dem zuzuordnenden Fahrzeug verbunden sind, wie beispielsweise der Bremsträger 6.

Die Rückstellkraft kann auf den jeweiligen Bremsbelag 3, 3' als Zug- oder/und Druckkraft aufgebracht werden. Hier wird die Rückstellkraft als Zugkraft auf den jeweiligen Bremsbelag 3, 3' aufgebracht.

Zur Aufbringung der Rückstellkraft auf den jeweiligen Bremsbelag 3, 3' greift die Rückstelleinrichtung 8 an dem jeweiligen Bremsbelag 3, 3' beispielsweise entweder zentral, an einem oberen und/oder unteren frei liegenden Randbereich der Belagträgerplatte an oder symmetrisch an zwei Anlagebereichen rechts und links. Die Anlagebereiche können dabei auch direkt an jeweiligen Eckabschnitten 4f der Belagträgerplatten 4 oben und/oder unten liegen. Es ist natürlich auch möglich, dass Angriffspunkte bzw. -bereiche an der jeweiligen Belagträgerplatte 4 auch beliebig, z.B. in der Mitte, angeordnet sein können.

Die Rückstelleinrichtung umfasst in diesem Ausführungsbeispiel mindestens ein Rückstellelement 17, 18 pro Bremsbelag 3, 3'.

Das Rückstellelement 17 weist einen Plattenabschnitt 17a, vier Befestigungsarme 17b mit jeweils einem Befestigungsende 17c, zwei Federarme 17d mit jeweils einem Stützabschnitt 17e und einen Federarm 17f mit einem Stützabschnitt 17g auf.

Der Plattenabschnitt 17a ist eine im Wesentlichen rechteckige Platte in der Mitte des Rückstellelementes 17 und ist mit den Befestigungsarmen 17b und den Federarmen 17d, 17f verbunden. Die Verbindungsstellen sind jeweils mit großen Abrundungen versehen. An den vier Endbereichen der rechteckigen Platte des Plattenabschnitts 17a ist jeweils einer der Befestigungsarme 17b angeordnet. So erstrecken sich von den oberen Endbereichen des Plattenabschnitts 17a zwei obere Befestigungsarme 17b nach oben, wobei sich von den unteren Endbereichen des Plattenabschnitts 17a zwei untere Befestigungsarme 17b nach unten erstrecken.

An den beiden Schmalseiten des Plattenabschnitts 17a ist jeweils ein Federarm 17d über einen Bogenabschnitt angebracht und erstreckt sich nach dem Bogen nach oben.

Der dritte Federarm 17f ist in der Mitte der unteren Seite des Plattenabschnitts 17a mit diesem verbunden und erstreckt sich nach unten.

Das gezeigte Rückstellelement 17 ist zentral an der Belagträgerplatte 4 des zuspannseitigen Bremsbelags 3 auf der Druckseite 4b dergestalt angebracht, dass die Befestigungsenden 17c der oberen Befestigungsarme 17b die Oberseite 4c der Belagträgerplatte 4 umgreifen und die Befestigungsenden 17c der unteren Befestigungsarme 17b die Unterseite 4c der Belagträgerplatte 4 umgreifen. In diesem Beispiel sind die Befestigungsenden 17c zu diesem Zweck umgebogen bzw. umgekantet und mit Endlaschen versehen. Auf diese Weise kann das Rückstellelement 17 in einfacher Weise als eine Art Klammer an dem zuspannseitigen Bremsbelag 3 angebracht werden, ohne dass dieser dazu angepasst werden muss.

Das Rückstellelement 17 liegt im gelösten Zustand der Scheibenbremse 10 zumindest mit Unterseiten des Plattenabschnitts 17a und der Befestigungsarme 17b an der Belagträgerplatte 4 des zuspannseitigen Bremsbelags 3 in Bezug auf die Bremsscheibe 2 in einer Ebene parallel zu der Bremsscheibe 2. Dabei kann diese Ebene auch als eine Vertikalebene bezeichnet werden.

Ein Abstand der oberen Befestigungsarme 17b in einer tangentialen Richtung zur Bremsscheibe 2 ist hier so bemessen, dass er eine Länge aufweist, die in etwa der Länge einer Seitenfläche 4e entspricht. Somit ergeben sich zwei Krafteinleitungspunkte bzw. -bereiche, die symmetrisch zu einer gedachten Querachse des zuspannseitigen Bremsbelags 3 an der Oberseite 4c der Belagträgerplatte 4 angeordnet sind. In gleicher Weise ist ein Abstand der unteren Befestigungsarme 17b in einer tangentialen Richtung zur Bremsscheibe 2 gebildet, wobei sich an der Unterseite 4d ebenfalls zwei weitere, symmetrisch zu der gedachten Vertikalachse angeordnete Krafteinleitungspunkte ergeben.

Im nicht eingebauten Zustand des Bremsbelags 3 (in Figur 4 dargestellt) liegen der Plattenabschnitt 17a und die Befestigungsarme 17b auf der Fläche der Druckseite 4b der Belagträgerplatte 4 auf.

Eine gedachte Längsachse des Plattenabschnitts 17a des Rückstellelementes 17 verläuft im Wesentlichen rechtwinklig zu der gedachten Querachse des zuspannseitigen Bremsbelags 3.

Die beiden sich nach oben erstreckenden Federarme 17d sind jeweils links und rechts von Befestigungsarmen 17b angeordnet. An den oberen freien Enden der Federarme 17d ist jeweils ein Stützabschnitt 17e angebracht. Die Stützabschnitte 17e sind hier laschenförmig ausgebildet und von der Druckseite 4b der Belagträgerplatte 4 des zuspannseitigen Bremsbelags 3 weg weisend um etwa 90° von dem jeweiligen Federarm 17d abgewinkelt.

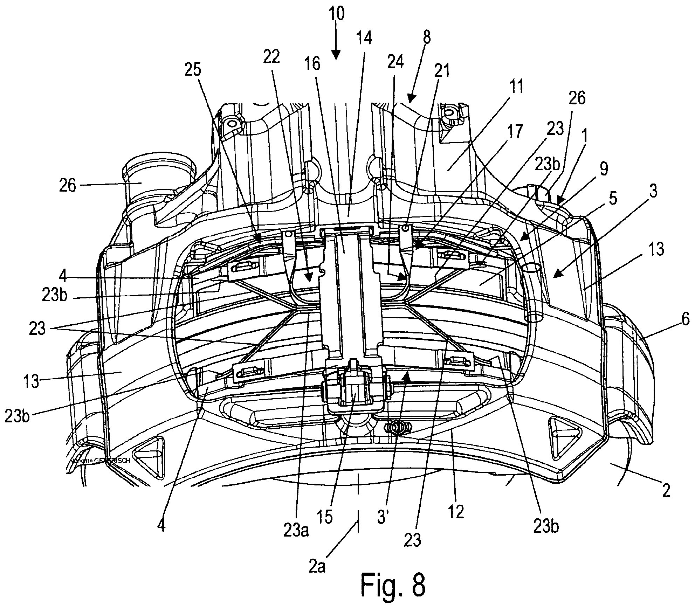

Die Federarme 17d bilden für das Rückstellelement 17 im eingebauten Zustand des zuspannseitigen Bremsbelags 3 eine Abstützung bzw. Verbindung an der oben genannten ortsfesten Referenz, beispielsweise an dem Bremsträger 6. Dazu werden die Federarme 17d über die laschenförmigen Stützabschnitte 17e z.B. an einem Haltebügel 25 befestigt, welcher an dem Bremsträger 6 fest angebracht ist. Dies wird unten weiter noch näher im Zusammenhang mit den Figuren 8-11 beschrieben.

Der nach unten weisende Federarm 17f ist an seinem unteren freien Ende mit einem Stützabschnitt 17g versehen. Im eingebauten Zustand des zuspannseitigen Bremsbelags 3 bildet dieser Federarm 17f eine weitere Abstützung bzw. Verbindung des Rückstellelementes 17 an der ortsfesten Referenz. Eine solche beispielhafte Abstützung an dem zuspannseitigen Brückenbogen 6d des ortsfesten Bremsträgers 6 ist in Figur 2 dargestellt. Hierzu kann der Stützabschnitt 17g auch als eine mit der Gestalt des Brückenbogens 6d korrespondierende Klammer ausgebildet sein. Natürlich sind auch andere Befestigungsmöglichkeiten, wie z.B. vernieten, verschrauben, denkbar.

Das Rückstellelement 17 ist auf diese Weise zwischen dem Bremsbelag 3 und dem Bremsträger 6, der hier die ortsfeste Referenz bildet, vorgespannt angebracht. Eine Vorspannung wird in dem Rückstellelement 17 dadurch erzeugt, dass die Federarme 17d, 17f, welche über den Plattenabschnitt 17a mit den Befestigungsarmen 17b verbunden sind, gegenüber den Befestigungsarmen 17b federelastisch verspannt werden. Auch die Befestigungsarme 17b können in gewisser Weise auch durch Biegung nach dem Biegebalkenprinzip gespannt werden. Die sich so ergebende Federkraft wird bei einem Bremsvorgang noch verstärkt, da sich der Bremsbelag 3 bei dem Bremsvorgang von den Stützpunkten der Federarme 17d, 17f am Bremsträger 6 weiter zur Bremsscheibe 2 hin wegbewegt. Beim Lösen der Bremse übt diese so zusätzlich vergrößerte Federkraft des Rückstellelementes 17 eine Zugkraft über die Befestigungsenden 17c der Befestigungsarme 17b auf den Bremsbelag 3 aus und bewirkt so eine Unterstützung der Rückstellung des zuspannseitigen Bremsbelags 3 von der Bremsscheibe 2 nach einem Bremsvorgang.

Die gezeigte Scheibenbremse 10 ist hier eine so genannte zweistempelige Scheibenbremse 10 mit zwei Druckstempeln, die mit der Druckseite 4b der Belagträgerplatte 4 des zuspannseitigen Bremsbelags 3 in Wirkverbindung stehen. Dazu weist die Druckseite 4b hier zwei nicht bezeichnete Erhöhungen auf, die mit den Druckstempeln in Kontakt stehen. Zwischen diesen Erhöhungen ist hier zentral das Rückstellelement 17 angeordnet. Im Fall einer einstempeligen Scheibenbremse 10 steht nur ein Druckstempel mit nur einer nun zentral auf der Druckseite 4b der Belagträgerplatte 4 des zuspannseitigen Bremsbelags 3 angeordneten Erhöhung in Kontakt. In diesem Fall können zwei Rückstellelemente 17, z.B. beidseitig dieser Erhöhung, zur Anwendung kommen.

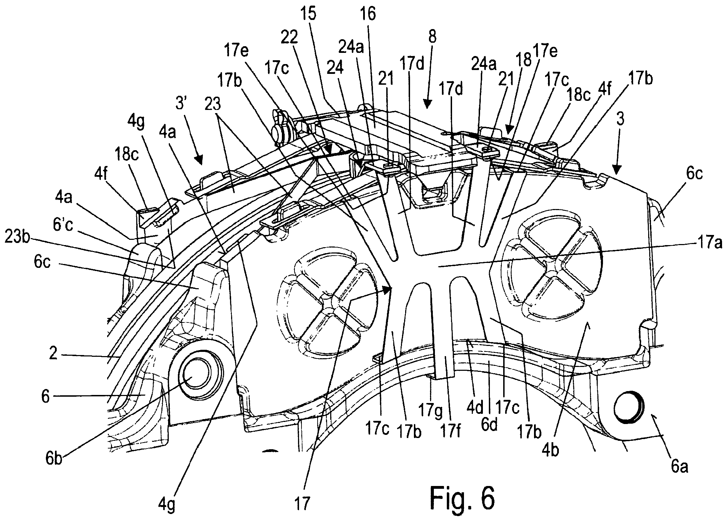

Der rückenseitige Bremsbelag 3' ist mit dem Rückstellelement 18 versehen, welches in Figur 3 im eingebauten Zustand des rückenseitigen Bremsbelags 3' und in Figur 6 vergrößert gezeigt ist.

Das Rückstellelement 18 für den rückenseitigen Bremsbelag 3' umfasst hier zwei Federarme 18a, zwei Befestigungsarme 18b mit jeweils einem Befestigungsende 18c und jeweils einer Befestigungslasche 18e, und einen Stützabschnitt 18f.

Die Federarme 18a sind mit ihren gegenüberliegenden Enden zusammen verbunden oder einstückig ausgebildet. In dem Verbindungsbereich ist der Stützabschnitt 18f in Form eines U-förmigen Bügels angebracht, welcher in Richtung der Bremsscheibendrehachse 2a zu dem Rückenabschnitt 12 des Bremssattels 1 hervorsteht. Die so verbundenen Federarme 18a erstrecken sich in einer Form korrespondierend zu der geschwungenen Kontur des unteren Randbereichs der Druckseite 4b der Belagträgerplatte 4 des rückenseitigen Bremsbelags 3' bis zu den unteren Enden der Belagträgerplatte 4.

An den freien Enden der Federarme 18a ist jeweils einer der Befestigungsarme 18b angebracht. Jeder Befestigungsarm 18b erstreckt sich über die gesamte Querrichtung der Belagträgerplatte nach oben bis zu einem jeweiligen Eckabschnitt 4f der Belagträgerplatte 4. An dem oberen freien Ende eines jeden Befestigungsarms 18b ist jeweils ein Befestigungsende 18c mit jeweils einem Endabschnitt 18d angeformt. Die Befestigungsenden 18c sind mit den Endabschnitten 18d L-förmig ausgebildet, wobei das Befestigungsende 18c jeweils um ca. 90° zu einem jeweiligen Befestigungsarm 18b so umgekantet ist, dass es mit seiner Unterseite auf der Oberseite 4c des jeweiligen Eckabschnitts 4f der Belagträgerplatte 4 aufliegt. Dabei ist der jeweilige Endabschnitt 18d von dem Befestigungsende 18c nach unten um ca. 90° abgekantet, verläuft parallel zu dem jeweiligen Befestigungsarm 18b und liegt an der Belagseite 4a der Belagträgerplatte 4 des rückenseitigen Bremsbelags 3' an. Die Befestigungsenden 18c der Befestigungsarme 18b des Rückstellelementes 18 bilden somit eine Art Klammer, die über den oberen Eckabschnitte 4f der Belagträgerplatte 4 angeordnet und festgeklemmt ist. Eine zusätzliche Befestigung ist jeweils mit einem Befestigungselement 20 vorgesehen. Das Befestigungselement 20 kann z.B. eine Schraube, ein Niet o.dgl. sein, welches den jeweiligen Endabschnitt 18d von der Belagseite 4a her an der Belagträgerplatte 4 des rückenseitigen Bremsbelags 3' fixiert. Dies ist in Figur 4 deutlich zu erkennen.

Die Befestigungsarme 18b sind zusätzlich an ihren unteren Ende im Bereich der jeweiligen Verbindung mit den Federarmen 18a jeweils an den Schmalseiten der Belagträgerplatte 4 des rückenseitigen Bremsbelags 3' mittels einer hakenförmigen Befestigungslasche 18e befestigt. Die hakenförmigen Befestigungslaschen 18e sind dazu in Ausnehmungen 19 in den unteren Eckbereichen der Seitenflächen 4e der Belagträgerplatte 4, z.B. klammerartig (siehe z.B. Figur 4) befestigt.

Der Stützabschnitt 18f in Form eines U-förmigen Bügels ist mit einem Schenkel an den Federarme 18a angebracht, wobei die Schenkel nach unten weisen. Mittels des Stützabschnitts 18f ist das Rückstellelement 18 mittig an dem rückenseitigen Brückenbogen 6'd des ortsfesten Bremsträgers 6 angebracht und bildet somit die Verbindung des Rückstellelementes 18 des rückenseitigen Bremsbelags 3' mit der ortsfesten Referenz, hier der Bremsträger 6.

Das Rückstellelement 18 liegt im gelösten Zustand der Scheibenbremse 10 zumindest mit Unterseiten der Befestigungsarme 18b an der Belagträgerplatte 4 des rückenseitigen Bremsbelags 3' in Bezug auf die Bremsscheibe 2 in einer Ebene parallel zu der Bremsscheibe 2. Dabei kann diese Ebene auch als eine Vertikalebene bezeichnet werden.

Das Rückstellelement 18 des rückenseitigen Bremsbelags 3' ist auf diese Weise zwischen dem rückenseitigen Bremsbelag 3' und dem Bremsträger 6, der hier die ortsfeste Referenz bildet, vorgespannt angebracht. Eine Vorspannung wird in dem Rückstellelement 18 dadurch erzeugt, dass die Federarme 18a welche jeweils an ihren äußeren Enden mit den Befestigungsarmen 18b verbunden sind, gegenüber den Befestigungsarmen 18b federelastisch verspannt werden. Auch die Befestigungsarme 18b können sich z.T. elastisch verspannen, z.B. um ihre Längsachse verwinden.

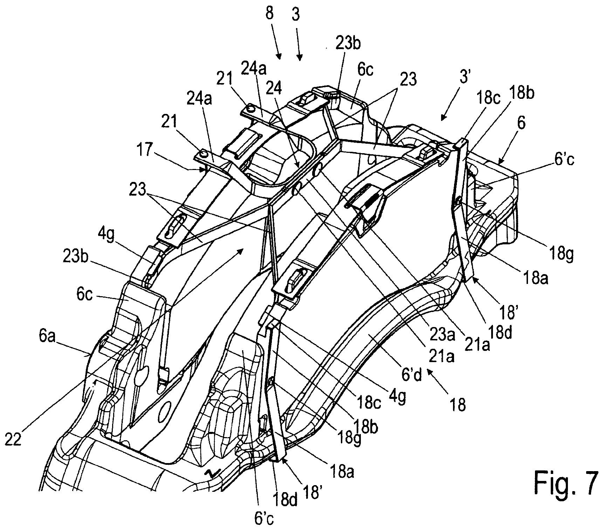

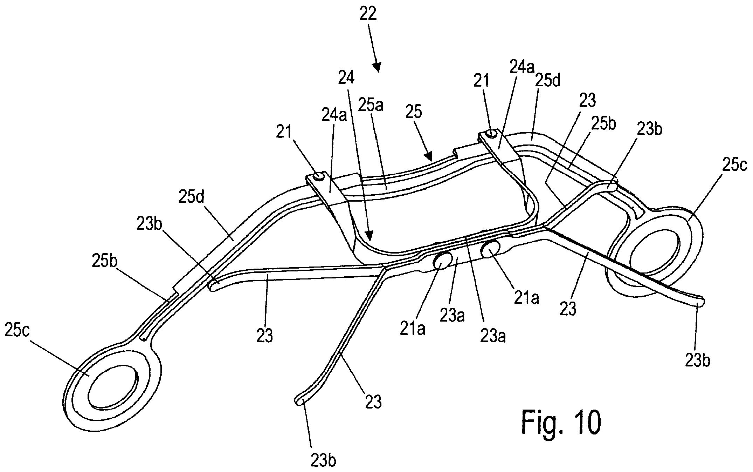

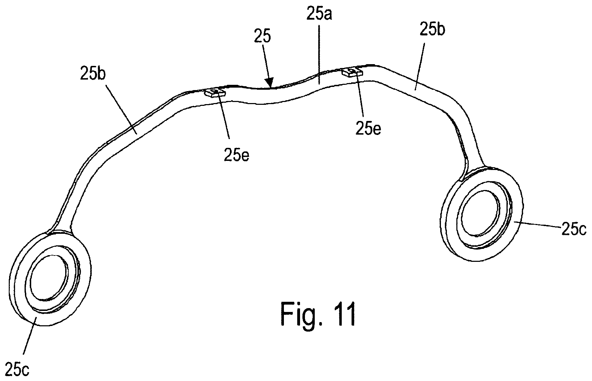

Die sich so ergebende Federkraft wird bei einem Bremsvorgang noch verstärkt, da sich der Bremsbelag 3' bei dem Bremsvorgang von dem Stützpunkt der Federarme 18a am Bremsträger 6 weiter zur Bremsscheibe 2 hin wegbewegt. Beim Lösen der Bremse übt diese so zusätzlich vergrößerte Federkraft des Rückstellelementes 18 eine Zugkraft über die Befestigungsenden 18c an den oberen Eckabschnitten 4f und über die Befestigungslaschen 18e der Befestigungsarme 18b an den unteren Eckabschnitten 4g auf den Bremsbelag 3' aus und bewirkt so eine Unterstützung der Rückstellung des rückenseitigen Bremsbelags 3' von der Bremsscheibe 2 nach einem Bremsvorgang. Dieser Effekt wird zusätzlich durch den fortschreitenden Belagverschleiß verstärkt. Da dadurch die Vorspannung der Federkraft der Rückstellelemente 17, 18 gesteigert wird
**Figuren 6** **und** **7** zeigen schematische Perspektivansichten des Bremsträgers 6 mit Bremsbelägen 3, 3' und einer Variante der Rückstelleinrichtung 8. **Figur 6** stellt eine Ansicht von der Zuspannseite dar, wobei **Figur 7** eine Draufsicht zeigt. **Figur 8** stellt eine schematische Perspektivansicht der Scheibenbremse 10 nach Figur 1 mit der Variante der Rückstelleinrichtung 8 nach Figuren 6-7 dar. **Figur 9** zeigt eine schematische Teilschnittansicht der Scheibenbremse 10 nach Figur 8, und Figur 9a stellt eine vergrößerte Schnittansicht der Anbindung des Bremssattels 1 mit einem Lagerabschnitt 26 an dem Bremsträger 6 nach Figur 9 dar. In **Figur 10** ist eine schematische Perspektivansicht eines Haltebügels 25 der Rückstelleinrichtung 8 nach Figuren 6-7 mit einer Spreizeinrichtung 22 dargestellt, und **Figur 11** zeigt eine schematische Perspektivansicht eines Haltebügels 25 der Rückstelleinrichtung 8.

Die Variante der Rückstelleinrichtung 8 besteht hier aus zwei Funktionsgruppen. Die erste Funktionsgruppe umfasst das mindestens eine Rückstellelement 17, 18 pro Bremsbelag 3, 3', wobei die zweite Funktionsgruppe mindestens eine Spreizeinrichtung 22 aufweist. Die beiden Funktionsgruppen sind hier gemeinsam vorhanden und unterstützen sich. Es ist aber auch möglich, dass nur eine der beiden Funktionsgruppen, oder nur ein Rückstellelement nur an einem der Bremsbeläge 3, 3' eingesetzt werden kann.

Das Rückstellelement 17 des zuspannseitigen Bremsbelags 3 ist oben schon ausführlich beschrieben worden. Das in Figur 6 gezeigte Rückstellelement 17 der Variante der Rückstelleinrichtung 8 weicht davon in einigen Punkten ab, die kurz erläutert werden.

Der Plattenabschnitt 17a verbindet auch hier die Befestigungsarme 17b und die Federarme 17d und 17f. Die oberen Befestigungsarme 17b sind hier mit ihren unteren Enden an den Schmalseiten des Plattenabschnitts 17a befestigt, wohingegen die oberen Federarme 17d zwischen den Befestigungsarmen 17b angeordnet sind. Dadurch ist der Abstand der oberen Krafteinleitungspunkte/- bereiche vergrößert. Auch der Abstand der unteren Krafteinleitungspunkte/- bereiche ist vergrößert, da die unteren Befestigungsarme 17b schräg nach außen verlaufend angeordnet sind.

Der Stützabschnitt 17g des unteren Federarms 17f ist hakenförmig ausgeführt und mit dem zuspannseitigen Brückenbogen 6d des Bremsträgers 6 verbunden.

Die oberen Federarme 17d sind mit ihren Stützabschnitten 17e über den hier nicht gezeigten Haltebügel 25 (siehe Figuren 8 bis 11) mit dem Bremsträger 6 als ortsfeste Referenz verbunden. Zusätzlich ist auch eine Halteeinrichtung 24 der Spreizeinrichtung 22 über Haltearme 24a zusammen mit den Stützabschnitten 17e an dem Haltebügel 25 angebracht. Dazu sind die Haltearme 24, die Stützabschnitte 17e und Verbindungsabschnitte 25e (siehe Figur 11) durch Befestigungselemente 21 fest verbunden. Die Befestigungselemente 21 können z.B. Nieten, Schrauben o.dgl. sein.

Das in Figur 7 gezeigte Rückstellelement 18 der Variante der Rückstelleinrichtung 8 unterscheidet sich von dem bereits oben beschriebenen Rückstellelement 18 des rückenseitigen Bremsbelags 3' darin, dass es aus zwei einzelnen Rückstelleinheiten 18' besteht.

Die Rückstelleinheiten 18' sind jeweils an einer Schmalseite des rückenseitigen Bremsbelags 3' an der Druckseite 4b der Belagträgerplatte 4 angeordnet. Jede Rückstelleinheit 18' umfasst einen Federarm 18a, einen Befestigungsarm 18b mit einem Befestigungsende 18c, und einen hakenförmigen Endabschnitt 18d.

Der Befestigungsarm 18b ist mit seinem oberen Befestigungsende 18c wie oder ähnlich wie bereits beschrieben an dem oberen Eckabschnitt 4f der Belag trägerplatte 4 angebracht. Der Befestigungsarm 18b erstreckt sich nach unten und ist etwa in der Mitte der Schmalseite der Druckseite 4b der Belagträgerplatte 4 mit seinem unteren Ende mittels eines Befestigungselementes 18g, z.B. Schraube oder/und Niet, fixiert. Diese Befestigung kann auch mittels eines Presssitzes zwischen dem Befestigungsarm 18b und einem an der Belagträgerplatte 4 angegossenem Pin/Vorsprung oder eingesetztem Stift ausgeführt sein. Dieses untere Ende des Befestigungsarms 18b geht in einem Knick in den Federarm 18a über, welcher so von der Druckseite 4b schräg hervorsteht und sich weiter nach unten erstreckt. An dem unteren freien Ende des Federarms 18a ist der hakenförmige Endabschnitt 18d angebracht. Der Endabschnitt 18d ist mit der ortsfesten Referenz, d.h. hier mit dem Bremsträger 6 verbunden. Diese Verbindungsstelle ist hier an einem Ende des rückenseitigen Brückenbogens 6'd des Bremsträgers 6.

Die obige Beschreibung der einen Rückstelleinheit 18' gilt auch die andere Rückstelleinheit 18' des rückenseitigen Rückstellelementes 18.

Auch dieses Rückstellelement 18 liegt im gelösten Zustand der Scheibenbremse 10 zumindest mit Unterseiten der Befestigungsarme 18b an der Belagträgerplatte 4 des rückenseitigen Bremsbelags 3' in Bezug auf die Bremsscheibe 2 in einer Ebene parallel zu der Bremsscheibe 2. Dabei kann diese Ebene auch als eine Vertikalebene bezeichnet werden.

Die Funktion des rückenseitigen Rückstellelementes 18 ist oben bereits erläutert worden.

Die zweite Funktionsgruppe weist die Spreizeinrichtung 22 auf, die im Folgenden erläutert wird.

Die Spreizeinrichtung 22 umfasst hier zwei identische Paare von Federarmen 23, eine Halteeinrichtung 24 und einen Haltebügel 25. Der Haltebügel 25 ist hier ortsfest zwischen Bremsträger 6 und Führungsholmen 26b der Lagerabschnitte 26 des Bremssattels 1 am Bremsträger 6 (siehe Figur 9) angebracht und bildet auf diese Weise an der ortsfesten Referenz sowohl zusammen mit den Haltearmen 24a der Halteeinrichtung 24 eine Halterung für die Paare der Federarme 23 als auch eine Halterung für das zuspannseitige Rückstellelement 17.

Die Federarme 23 liegen jeweils mit Druckenden 23b an zwei sich gegenüberliegenden Endbereichen der jeweiligen Belagträgerplatte 4 an und zwar in einem oberseitig vorstehenden Randbereich der jeweiligen Belagseite 4a. Die Enden der Federarme 23 sind gleichfalls zu Druckenden 23b gebogen, so dass ein Gleiten an der jeweiligen Fläche der jeweiligen Belagseite 4a beim Zuspannen und Lösen der Bremse möglich ist. Zusätzliche Vorsprünge 4g bilden jeweils Führungen für die Druckenden 23b. Auf diese Weise wird durch die beim Zuspannen sich ergebende Vorspannung eine Spreizung bzw. Rückstellung der Bremsbeläge 3, 3' nach einem Lösen der Bremse möglich.

Jeweils ein Paar von Federarmen 23 wirkt mit einem Bremsbelag 3, 3' zusammen. Jedes Paar von Federarmen 23 weist einen zentralen Verbindungsabschnitt 23a (siehe Figur 7) auf, an welchem in Längsrichtung an beiden Enden jeweils ein Federarm 23 angebracht und von der Mitte zu dem jeweiligen Bremsbelag 3, 3' hin gebogen ist. Die beiden Paare von Federarmen 23 sind mit ihren zentralen Verbindungsabschnitten 23a und einem Verbindungsabschnitt der Halteeinrichtung 24 in der Mitte der Öffnung 9 mit Befestigungselementen 21a, z.B. Schrauben, Nieten o.dgl. fest verbunden. Die Verbindungsabschnitte 23a der Federarme 23 und der Halteeinrichtung 24 liegen parallel aneinander und in Ebenen der Bremsscheibe 2.

Die Halteeinrichtung 24 weist zwei Haltearme 24a auf, von denen jeweils einer an jedem Ende des Verbindungsabschnitts angebracht und zum Zuspannabschnitt 11 hin umgebogen ist. Die Haltearme 24a erstrecken sich bis über den Haltebügel 25, welcher im Bereich eines zuspannseitigen Rands der Öffnung 9 angeordnet ist, und sind mit diesem wie oben beschrieben verbunden.

Der Haltebügel 25 umfasst einen leicht geschwungenen Zentralabschnitt 25a. An den Zentralabschnitt 25a schließt sich auf jeder Seite ein um etwa 45° nach unten verlaufender Arm 25b an. An den freien Ende dieser beiden Arme 25b ist jeweils ein kreisrunder Befestigungsabschnitt 25c mit einer Öffnung angebracht. So erstreckt sich der Haltebügel 25 im eingebauten Zustand (Figur 8) mit seinen Armen 21b beidseitig jeweils bis zu den Lageraufnahmen 6b des Bremsträgers 6 auf dessen Befestigungsseite 6a (siehe Figur 1). Im eingebauten Zustand sind die Befestigungsabschnitte 25c mit ihren Öffnungen koaxial zu den jeweiligen Lageraufnahmen 6b des Bremsträgers 6 angeordnet.

In der Ausführung nach Figur 10 sind die oberen Ränder der Arme 25b des Haltebügels 25 bis zu dem Zentralabschnitt 25a mit einer Verstärkung 25d versehen, in deren Endbereichen über den Enden des Zentralabschnitts 25a jeweils ein Verbindungsabschnitt 25e ein horizontales Auflager, z.B. in Form einer Winkellasche, bildet und an dem Haltebügel 25 angebracht ist. Diese Verbindungsabschnitte 25e dienen sowohl zur Verbindung mit den darauf aufliegenden Enden eines jeden Haltearms 24a der Halteeinrichtung 22 als auch zur Verbindung mit den Stützabschnitten 17e der Federarme 17d des zuspannseitigen Rückstellelementes 17 (siehe Figuren 2, 4, 6).

Die Spreizeinrichtung 22 liegt projiziert in einer Horizontalebene, die eine Tangentialebene der Bremsscheibe 2 ist und rechtwinklig zu der Vertikalebene der Rückstellelemente 17 und 18 liegt.

Der Haltebügel 25 kann natürlich auch ohne die Verstärkungen 25d ausgebildet sein. Dies ist in Figur 11 dargestellt.

In **Figur** 9 und in einer vergrößerten Teilschnittansicht in **Figur 9b** ist gezeigt, wie der Haltebügel 25 der Rückstelleinrichtung 8 mit seinen Befestigungsabschnitten 25c und den Öffnungen wie oben schon erwähnt koaxial zu den Lageraufnahmen 6b für die Befestigung der Führungsholme 26b mittels Lagerschrauben 26d zwischen den Lagerabschnitten 26 und Befestigungsenden 26c der Führungsholme 26b und der Befestigungsseite 6a des Bremsträgers 6 angeordnet ist.

Auf diese Weise sind die Führungsholme 26b durch die Lagerschrauben 26d mit dem Bremsträger 6 und den dazwischen angeordneten Befestigungsabschnitten 25c des Haltebügels 25 fest verbunden. Somit sind die Führungsholme 26b und der Haltebügel 25 über die Befestigungsabschnitte 25c ebenfalls ortsfest wie der Bremsträger 6.

Das in den Figuren 9 und 9a gezeigte Axiallager umfasst den Lagerabschnitt 26 als Bestandteil des Bremssattels 1, den Führungsholm 26b, die Lagerschraube 26d und ein zwischen dem Führungsholm 26b und dem Lagerabschnitt 26 angeordnetes Lagerelement 26a, z.B. eine Axiallagerbuchse. Dies gilt in ähnlicher Weise auch für das andere Axiallager.

Die Rückstelleinrichtung 8 kann auch als Nachrüstteil, z.B. bei Belagwechsel und/oder Wartung in die Scheibenbremse 10 eingebaut werden. Dies ist in einfacher Weise möglich, da der Haltebügel 25 nur nachträglich eingesetzt werden muss, ohne dass Änderungen vorzunehmen sind. Ebenso sind die Rückstellelemente 17, 18 an den Bremsbelägen 3, 3' einfach anzubringen.

Die erste Funktionsgruppe übt mittels des Rückstellelementes 17 und/oder 18 im mittleren oder/und im unteren Bereich der Belagträgerplatten 4 der sich gegenüberliegenden Bremsbeläge 3, 3' jeweils Zugkräfte auf die Bremsbeläge 3, 3' entgegen der Zuspannrichtung aus. Die zweite Funktionsgruppe greift mit der Spreizeinrichtung 22 in den oberen Eckabschnitten 4f an den Belagseiten 4a der Belagträgerplatten 4 der sich gegenüberliegenden Bremsbeläge 3, 3' gleich wirkend ebenfalls entgegen der Zuspannrichtung an. Auf diese Weise werden die Bremsbeläge 3, 3' sowohl in ihren oberen Bereichen als auch in ihren mittleren oder/und unteren Bereichen von der Rückstelleinrichtung 8 gleichzeitig mit Rückstellkräften beaufschlagt.

Der Haltebügel 25 bildet insofern eine Zentriereinrichtung für den Bremssattel 1, als der Bremsträger 6, an dem der Haltebügel 25 über die Führungsholme 26b (Figur 9) befestigt ist, ein ortsfestes Teil der ortsfesten Referenz bildet, dem gegenüber der Bremssattel 1 verschieblich gelagert ist, so dass nach einem Lösen der Bremse und einem Spreizen der Spreizeinrichtung 22 und/oder Aktivieren der Rückstellelemente 17, 18, d.h. einem Auseinanderdrücken/- ziehen der Bremsbeläge 3, 3' der Bremssattel 1 in eine zentrierte Stellung geführt wird.

Der Haltebügel 25 kann z.B. als ein Stanzbiegeteil hergestellt werden, wobei zur Versteifung geeignete Maßnahmen vorgesehen sein können, wie z.B. Versteifungen und Sicken u.dgl.

Die beiden Federarme 23 eines jeden Paars von Federarmen 23 sind hier spiegelbildlich zu einer gedachten Längsachse der Öffnung 9, die in einer Mittenebene der Bremsscheibe 2 liegt, angeordnet.

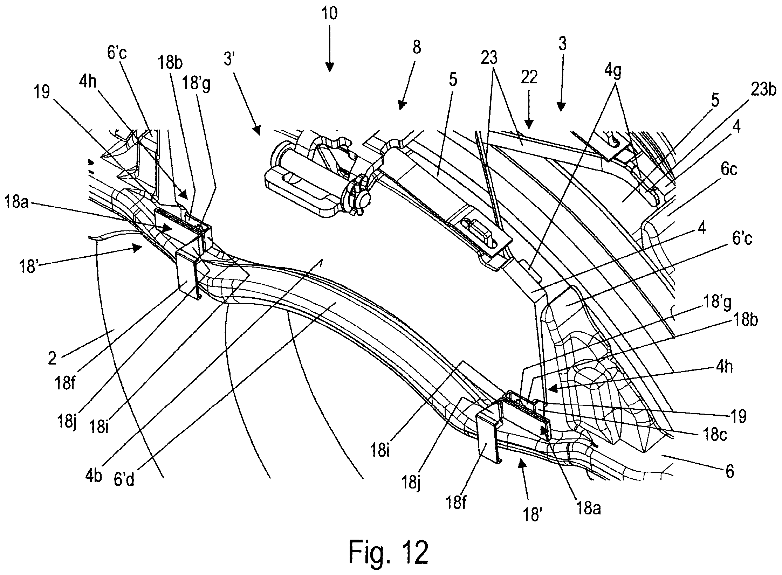

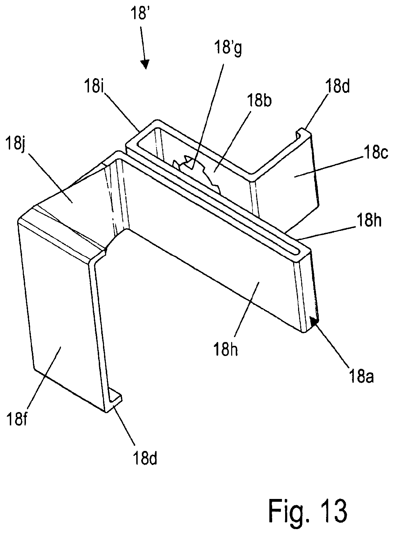

In **Figur 12** ist eine schematische Perspektivansicht einer weiteren Variante der Rückstelleinrichtung 8 nach Figur 7 gezeigt. **Figur 13** stellt eine vergrößerte schematische Perspektivansicht einer Rückstelleinheit der Variante der Rückstelleinrichtung nach Figur 12 dar.

**Figur 12** zeigt eine schematische Perspektivansicht der Druckseite 4b der Belagträgerplatte 4 des rückenseitigen Bremsbelags 3' in seinem zugehörigen Belagschacht in dem Bremsträger 6 zwischen den Bremsträgerhörnern 6'c.

Das Rückstellelement 18 weist wie das Rückstellelement 18 nach Figur 7 zwei Rückstelleinheiten 18' auf.

Im Unterschied zu der Variante nach Figur 7 sind die Rückstelleinheiten 18' dieser weiteren Variante spiegelbildlich ausgeführt und jeweils nur in den beiden unteren Eckabschnitten 4h der Belagträgerplatte 4 des rückenseitigen Bremsbelags 3' angeordnet.

Jede Rückstelleinheit 18' umfasst hier Federarm 18a mit zwei parallelen Federlaschen 18h, einen Befestigungsarm 18b mit einem Befestigungsende 18c mit einem umgekanteten Endabschnitt 18d und einen Stützabschnitt 18f mit einem umgekanteten Endabschnitt 18d.

Der Befestigungsarm 18b ist mit einer Durchgangsöffnung 18'g für ein Befestigungselement 18g (siehe z.B. Figur 7) versehen. An einem Ende des Befestigungsarm 18b ist das Befestigungsende 18c um ca. 90° umgekantet angebracht, an dessen freiem Ende der ebenfalls um 90° umgekantete Endabschnitt 18d angeformt ist. Der Befestigungsarm 18b liegt auf der Druckseite 4b der Belagträgerplatte 4 auf, wobei das Befestigungsende 18c mit dem Endabschnitt 18d die Ausnehmung 19 der Belagträgerplatte 4 hakenförmig umgreift. Auf diese Weise ist die Rückstelleinheit 18' an der Belagträgerplatte 4b festgeklemmt und durch das Befestigungselement 18g (oder eine ähnliche Befestigungsmöglichkeit) fixiert.

An dem anderen Ende des Befestigungsarms 18b steht ein um 90° abgekanteter Verbindungsabschnitt 18i von der Druckseite 4b der Belagträgerplatte 4 hervor, welcher an seinem freien Ende mit einer wiederum um 90° nach außen umgekanteten ersten Federlasche 18h des Federarms 18a verbunden ist. Parallel zu dieser Federlasche 18h ist eine weitere, zweite Federlasche 1 angeordnet, die mit ihrem äußeren Ende mit dem äußeren Ende der ersten Federlasche 18h verbunden ist. Das innere Ende dieser zweiten Federlasche 18h ist mit einem rechtwinklig, von der Druckseite 4b wegweisend hervorstehenden Verbindungsabschnitt 18j verbunden. Dieser Verbindungsabschnitt 18j ist um seine Längsachse verwunden und geht an seinem Ende in den hakenförmigen, nach unten weisenden Stützabschnitt 18f mit dem Endabschnitt 18d über.

Der hakenförmige Stützabschnitt 18f mit dem Endabschnitt 18d bildet eine Verbindung des Rückstellelementes 18' mit der ortsfesten Referenz, d.h. hier mit dem Bremsträger 6.

Die parallel zueinander angeordneten Federlaschen 18h des Federarms 18a sind vorgespannt und üben auf den rückenseitigen Bremsbelag 3' eine Zugkraft als Rückstellkraft aus.

Die obige Beschreibung gilt natürlich auch für die spiegelbildliche andere Rückstelleinheit 18'.

Bei einem Bremsvorgang wird das Rückstellelement 18 mit seinen Rückstelleinheiten 18' wie oben erläutert gespannt und übt auf die Belagträgerplatte 4 durch die Befestigung an ihr Zugkräfte zur Rückstellung des rückenseitigen Bremsbelags 3' von der Bremsscheibe 2 weg nach einem Bremsvorgang aus.

Die Spreizeinrichtung 22 kann auch als eine erste Funktionsgruppe bezeichnet werden, welche an den oberen Rändern der Bremsbeläge angreift. Der Angriff der Spreizeinrichtung 22 an den beiden Bremsbelägen 3, 3' erfolgt zweckmäßigerweise an der jeweiligen Belagträgerplatte 4 eines jeden Bremsbelags 3, 3' und zwar auf der dem daran befestigten Reibbelag 5 zugewandten Belagseite 4a oder an der gegenüberliegenden Rückenseite, die als Druckseite 4b bezeichnet wird. Um ein Verkanten des jeweiligen Bremsbelages 3, 3' um seine Querachse bei der Rückstellung zu vermeiden, greift die Spreizeinrichtung 22 entweder zentral, an einem oberen frei liegenden Randbereich der Belagträgerplatte 4 an oder symmetrisch an zwei Anlagebereichen rechts und links.

Das Rückstellelement 17, 18 kann als zweite Funktionsgruppe bzw. als Belagrückstelleinheit bezeichnet werden. Jedem Bremsbelag 3, 3' kann eine Belagrückstelleinheit zugeordnet sein, wobei es auch möglich ist, dass nur ein Bremsbelag 3, 3' mit einer Belagrückstelleinheit versehen ist. Die zweite Funktionsgruppe wirkt auf zumindest einen dritten Angriffspunkt an dem jeweiligen Bremsbelag 3, 3' ein. Dieser dritte Angriffspunkt kann beispielsweise im Bereich des mittleren Reibradius, des Schwerpunkts oder mittig, d.h. zentral im Schnittpunkt der gedachten Querachse und Längsachse des Bremsbelags 3, 3', symmetrisch zur Querachse an zwei Anlagebereichen rechts und links davon auf der Längsachse oder/und in einem unteren Randbereich des Bremsbelags 3, 3' liegen.

Die Bremsbeläge 3, 3' werden zwar bereits durch die erste Funktionsgruppe, d.h. die Spreizeinrichtung 22, nach einem Bremsvorgang zurückgestellt, wobei allerdings hierbei die Spreizeinrichtung 22 nur in einem oberen Bereich der Bremsbeläge 3, 3' angreift. Dieser Angriffsbereich liegt außerhalb eines Schwerpunkts des jeweiligen Bremsbelags 3, 3' und kann zu einer Schrägstellung der Bremsbeläge 3, 3' führen und Schrägverschleiß fördern. Unter der Schrägstellung ist hier ein so genanntes Kippen des jeweiligen Bremsbelags 3, 3' um eine Längsachse zu verstehen, die z.B. durch seinen Schwerpunkt verläuft. D.h., dass die Spreizeinrichtung ein Kippmoment z.B. um die Schwerpunktsachse bzw. um eine so genannte Kippkante des Bremsbelags 3, 3' verursachen kann.

Unter dem Begriff "außerhalb eines Schwerpunkts" ist zu verstehen, dass eine Wirkungslinie einer Rückstellkraft in einer Projektion auf eine vertikale Ebene, die längs der Bremsscheibendrehachse 2a liegt, durch den Schwerpunkt nicht axial, d.h. nicht parallel zu der Bremsscheibendrehachse 2a, verläuft.

Die Belagrückstelleinheiten bzw. Rückstellelemente 17, 18 haben daher neben einer Rückstellfunktion für den jeweiligen Bremsbelag 3, 3' auch die weitere Funktion, ein Kippen des jeweiligen Bremsbelags 3, 3' zu verhindern. Dazu greifen die Belagrückstelleinheiten zumindest in dem dritten Angriffspunkt beispielsweise im Bereich des mittleren Reibradius, des Schwerpunkts oder mittig, d.h. zentral im Schnittpunkt der gedachten Querachse und Längsachse des Bremsbelags 3, 3', symmetrisch zur Querachse an zwei Anlagebereichen rechts und links davon auf der Längsachse oder/und in einem unteren Randbereich des Bremsbelags 3, 3' an. Auf diese Weise kann das durch die Spreizeinrichtung 22 mögliche erzeugte Kippmoment verringert oder sogar eliminiert werden.

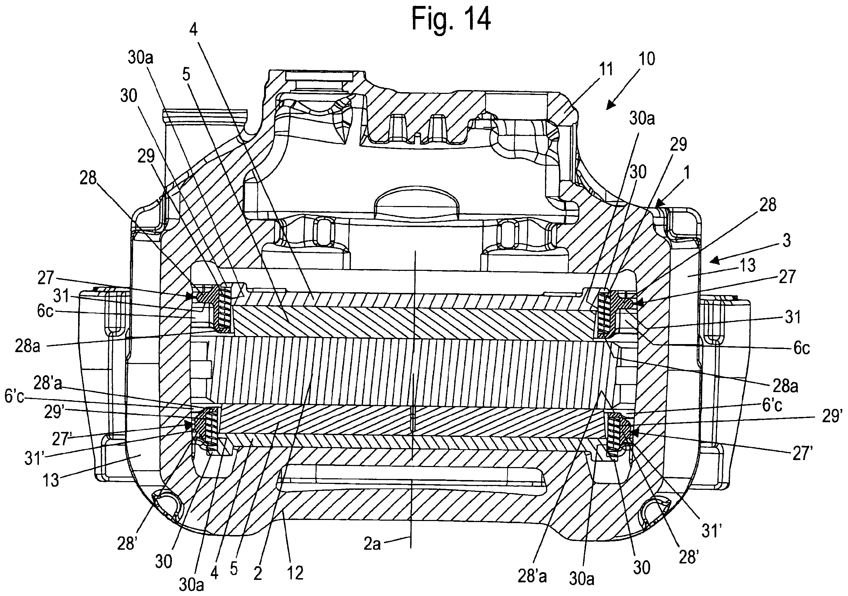

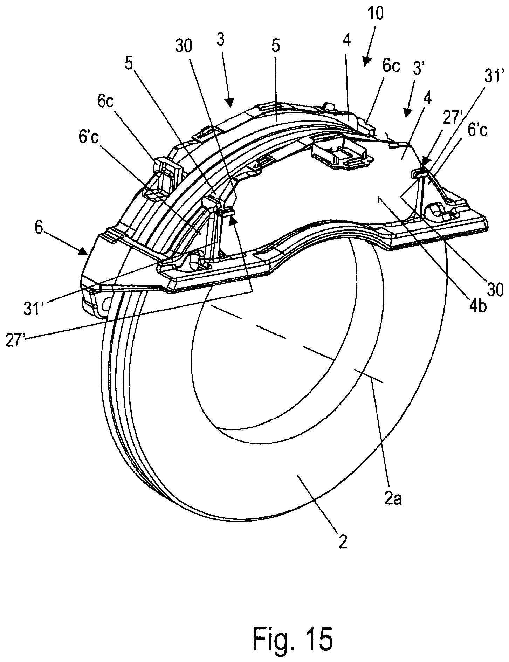

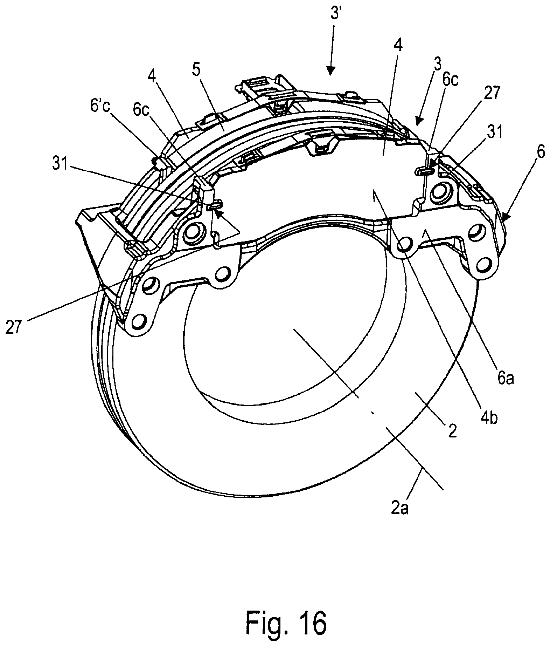

**Figur 14** zeigt eine schematische Schnittansicht eines weiteren Ausführungsbeispiels einer Scheibenbremse 10 mit einer anderen Variante der Rückstelleinrichtung 8. **Figur 15** stellt eine schematische Perspektivansichten des weiteren Ausführungsbeispiels nach Figur 14 mit Ansicht des rückenseitigen Bremsbelags 3' dar. In **Figur 16** ist eine schematische Perspektivansichten des weiteren Ausführungsbeispiels nach Figur 14 mit Ansicht des zuspannseitigen Bremsbelags 3 gezeigt.

Die in diesem Ausführungsbeispiel gezeigte andere Variante der Rückstelleinrichtung 8 umfasst pro Bremsbelag 3, 3' zwei Rückstellelemente 27, 27'.

Jedes Rückstellelement 27, 27' weist eine Halterung 28, 28' und eine Druckfeder 29, 29' auf. In jeder Halterung 28, 28' ist eine Druckfeder 29, 29' derart eingesetzt, dass eine Kraftrichtung der jeweiligen Druckfeder 29, 29' parallel zu der Bremsscheibendrehachse 2a, also axial, verläuft.

Jede Halterung 28, 28' ist von einer Belagschachtseite her in eine Ausnehmung 31, 31' in einem jeweiligen Bremsträgerhorn 6c, 6'c eingesetzt und in diesem befestigt. Die Ausnehmungen 31, 31' korrespondieren in ihrer Form einer Außenkontur der jeweiligen Halterung 28, 28'. Die Ausnehmungen 31 der zuspannseitigen Bremsträgerhörner 6c liegen sich gegenüber, dies ist ebenso bei den Ausnehmungen 31' der rückenseitigen Bremsträgerhörner 6'c der Fall.

Die Druckfedern 29, 29' stützen sich jeweils mit einem Federende, das zur Bremsscheibe 2 weist, an einem Auflageabschnitt 28a, 28'a der Halterungen 28, 28a ab. Das andere Federende einer jeweiligen Druckfeder 29, 29' steht jeweils mit einem Druckabschnitt 30 der jeweiligen Belagträgerplatte 4 des jeweils zugehörigen Bremsbelags 3, 3' in Kontakt. Zudem sind die Endbereiche mit den anderen Federenden der Druckfedern 29, 29' jeweils in einer Ausnehmung einer jeweiligen Seitenfläche 4e (siehe z.B. Figur 4) einer jeweiligen Belagträgerplatte 4 aufgenommen.

Die Druckfedern 29, 29' sind hier unter Vorspannung zwischen einem jeweiligen Bremsträgerhorn 6c, 6'c des ortsfesten Bremsträgers 6 und den Belagträgerplatten 4 der Bremsbeläge 3, 3' angeordnet. Die Bremsträgerhörner 6c, 6'c bilden somit eine ortsfeste Referenz. Die Federkräfte der Druckfedern 29, 29' wirken in Richtung der Bremsscheibendrehachse 2a auf einen jeden Bremsbelag 3, 3' dergestalt, dass jeder Bremsbelag 3, 3' von der Bremsscheibe 2 weggedrückt wird. So wirken die Federkräfte der Druckfedern 29 auf den zuspannseitigen Bremsbelag 3 derart, dass dieser zu dem Zuspannabschnitt 11 des Bremssattels 1 gedrückt wird. Und die Federkräfte der Druckfedern 29' wirken auf den rückenseitigen Bremsbelag 3 derart, dass dieser zu dem Sattelrücken 12 des Bremssattels 1 gedrückt wird.

Die Rückstellelemente 27, 27' sind - wie in den Figuren 15 und 16 zu erkennen ist - auf einer gedachten in Bezug auf die Bremsscheibe 2 tangentialen Linie angeordnet, die in etwa durch einen Schwerpunkt der Bremsbeläge 3, 3' verläuft und in einem kleinen Abstand unterhalb der Kopfseiten der Bremsträgerhörner 6c, 6'c liegt. Dieser kleine Abstand entspricht hier z.B. ungefähr der Dicke einer Belagträgerplatte 4.

Die Erfindung wird durch die oben beschriebenen Ausführungsbeispiele nicht eingeschränkt. Sie ist im Rahmen der beigefügten Ansprüche modifizierbar.

Für einen nachträglichen Einbau der Rückstelleinrichtung 8 mit Rückstellelementen 17, 18 können die entsprechenden Bremsbeläge 3, 3' beim Wechsel verwendet werden. Ebenfalls kann dabei auch die Spreizeinrichtung 22 zum Einsatz kommen.

Zusätzlich zu einer Referenz an ein ortsfestes Bauteil (in diesem Fall der Bremsträger 6) sind Rückstellelemente auch zwischen den Bremsbelägen 3, 3' und ortsungebundenen/ axial verschiebbaren Bauteilen (z.B. Bremssattel 1 oder Belaghaltebügel 16) möglich. Diese gewährleisten ein jeweiliges Positionieren der Bremsbeläge 3, 3' zu dem verschiebbaren Bremssattel 1 in Schwimmsattelausführung. Eine der Referenzen an dem Bremssattel 1 kann z.B. dessen Bodenblech 11a (siehe Figur 1) sein.

### BEZUGSZEICHENLISTE

- 1: Bremssattel
- 2: Bremsscheibe
- 2a: Bremsscheibendrehachse
- 3, 3': Bremsbelag
- 4: Belagträgerplatte
- 4a: Belagseite
- 4b: Druckseite
- 4c: Oberseite
- 4d: Unterseite
- 4e: Seitenfläche
- 4f, 4h: Eckabschnitt
- 4g: Vorsprung
- 5: Reibbelag
- 5a: Schlitz
- 6: Bremsträger
- 6a: Befestigungsseite
- 6b: Lageraufnahme
- 6c, 6'c: Bremsträgerhorn
- 6d, 6'd: Brückenbogen
- 7: Belaghaltefeder
- 8: Rückstelleinrichtung
- 9: Öffnung
- 10: Scheibenbremse
- 11: Zuspannabschnitt
- 11a: Bodenblech
- 12: Sattelrücken
- 13: Zugstrebe
- 14, 15: Halteabschnitt
- 16: Belaghaltebügel
- 17: Rückstellelement
- 17a: Plattenabschnitt
- 17b: Befestigungsarm
- 17c: Befestigungsende
- 17d, 17f: Federarm
- 17e, 17g: Stützabschnitt
- 18: Rückstellelement
- 18': Rückstelleinheit
- 18a: Federarm
- 18b: Befestigungsarm
- 18c: Befestigungsende
- 18d: Endabschnitt
- 18e: Befestigungslasche
- 18f: Stützabschnitt
- 18g: Befestigungselement
- 18'g: Durchgangsöffnung
- 18h: Federlasche
- 18i, 18j: Verbindung
- 19: Ausnehmung
- 20; 21, 21a: Befestigungselement
- 22: Spreizeinrichtung
- 23: Federarm
- 23a: Verbindungsabschnitt
- 23b: Druckende
- 24: Halteeinrichtung
- 24a: Haltearm
- 25: Haltebügel
- 25a: Zentralabschnitt
- 25b: Arm
- 25c: Befestigungsabschnitt
- 25d: Versteifungsabschnitt
- 25e: Verbindungsabschnitt
- 26: Lagerabschnitt
- 26a: Lagerelement
- 26b: Führungsholm
- 26c: Befestigungsende
- 26d: Lagerschraube
- 27, 27': Rückstellelement
- 28, 28': Halterung
- 28a, 28'a: Auflageabschnitt
- 29, 29': Druckfeder
- 30: Druckabschnitt
- 31, 31': Ausnehmung

- AS: Auslaufseite
- ES: Einlaufseite

## Patentansprüche

1. Scheibenbremse (10) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (9) über der Bremsscheibe (2) aufweist, zwei im Bremssattel (1) angeordneten, gegensinnig bewegbaren, jeweils eine Belagträgerplatte (4) und einen darauf befestigten Reibbelag (5) aufweisenden Bremsbelägen (3, 3'), von denen ein aktionsseitiger bzw. zuspannseitiger Bremsbelag (3), mittels einer Zuspanneinrichtung über mindestens einen Bremsstempel gegen die Bremsscheibe (2) pressbar ist, sowie mindestens einer Rückstelleinrichtung (8), mit welcher die Bremsbeläge (3, 3') nach einem bremsbedingten Verschieben und Lösen der Bremse rückführbar sind, wobei die Bremsbeläge (3, 3') in Belagschächten zwischen jeweils zwei Bremsträgerhörnern (6c, 6'c) angeordnet sind und mit Abschnitten ihrer Unterseiten (4d) auf jeweiligen Auflagen eines jeweiligen, durch einen Brückenbogen (6d, 6'd) des Bremsträgers (6) gebildeten Belagschachtbodens des Bremsträgers (6) aufliegen,
wobei die Rückstelleinrichtung (8) mindestens ein an einem Bremsbelag (3, 3') angebrachtes Rückstellelement (17, 18) aufweist, das zwischen diesem Bremsbelag (3, 3') und einer ortsfesten Referenz angeordnet ist und auf den Bremsbelag (3, 3') eine Rückstellkraft ausübt, wobei
das mindestens eine Rückstellelement (17, 18) eine Zugkraft als Rückstellkraft auf den Bremsbelag (3, 3') ausübt, an welchem das mindestens eine Rückstellelement (17, 18) angebracht ist, wobei
das mindestens eine Rückstellelement (17, 18) an einer Druckseite (4b) einer Belagträgerplatte (4) des Bremsbelags (3, 3') angebracht ist, wobei das mindestens eine Rückstellelement (17, 18) mit Befestigungsarmen (17b; 18b) an der Belagträgerplatte (4) des Bremsbelags (3, 3') zentral, an einem oberen, unteren oder/und seitlich liegenden Randbereich der Belagträgerplatte (4) angebracht ist, wobei das mindestens eine Rückstellelement (17, 18) mit mindestens einem Federarm (17d, 17f; 18a) mit der ortsfesten Referenz verbunden ist,
**dadurch gekennzeichnet, dass**
das mindestens eine Rückstellelement (17, 18) mit dem mindestens einen Federarm (17f; 18a) mit dem jeweiligen Brückenbogen (6d, 6'd) des Bremsträgers (6) als ortsfeste Referenz verbunden ist.

2. Scheibenbremse (10) nach Anspruch 1,
**dadurch gekennzeichnet, dass**
das mindestens eine Rückstellelement (17, 18) zwischen der ortsfesten Referenz und dem Bremsbelag (3, 3') vorgespannt angeordnet ist.

3. Scheibenbremse (10) nach Anspruch 1 oder 2,
**dadurch gekennzeichnet, dass**
das mindestens eine Rückstellelement (17, 18) zumindest mit Unterseiten der Befestigungsarme (17b; 18b) in Bezug auf die Bremsscheibe (2) in einer Vertikalebene parallel zu einer Ebene der Bremsscheibe (2) liegt.

4. Scheibenbremse (10) nach einem der vorhergehenden Ansprüche,
**dadurch gekennzeichnet, dass**
das mindestens eine Rückstellelement (17, 18) mit dem mindestens einen Federarm (17d, 17f; 18a) mit dem Bremsträger (6) als ortsfeste Referenz verbunden ist.

5. Scheibenbremse (10) nach einem der vorhergehenden Ansprüche,
**dadurch gekennzeichnet, dass**
das mindestens eine Rückstellelement (17) an dem zuspannseitigen Bremsbelag (3) angebracht ist und mit mindestens einen Federarm (17d) mit dem Bremsträger (6) als ortsfeste Referenz über einen Haltebügel (25) verbunden ist.

6. Scheibenbremse (10) nach Anspruch 5,
**dadurch gekennzeichnet, dass**
das mindestens eine Rückstellelement (17) an dem zuspannseitigen Bremsbelag (3) angebracht ist, mit mindestens einen Federarm (17d) mit dem Bremsträger (6) als ortsfeste Referenz über den Haltebügel (25) verbunden ist und zusätzlich mit mindestens einem weiteren Federarm (17f) mit dem Brückenbogen (6d, 6'd) des Bremsträgers (6) als ortsfeste Referenz verbunden ist.

7. Scheibenbremse (10) nach Anspruch 5 oder 6,
**dadurch gekennzeichnet, dass**
der Haltebügel (25) zwischen dem Bremsträger (6) und Führungsholmen (26b) von Axiallagern des Bremssattels (1) am Bremssattel (6) angebracht ist.

8. Scheibenbremse (10) nach einem der vorhergehenden Ansprüche,
**dadurch gekennzeichnet, dass**
das mindestens eine Rückstellelement (18) an dem rückenseitigen Bremsbelag (3') mit jeweils mindestens einem Befestigungsarm (18b) an jeweils einem seitlichen Bereich einer Druckseite (4b) der Belagträgerplatte (4) des rückenseitigen Bremsbelags (3') angebracht und mit zwei Federarmen (18a) mittig an einem Brückenbogen (6'd) des Bremsträgers (6) als ortsfeste Referenz verbunden ist.

9. Scheibenbremse (10) nach einem der Ansprüche 1 bis 7,
**dadurch gekennzeichnet, dass**
das mindestens eine Rückstellelement (18) an dem rückenseitigen Bremsbelag (3') angebracht ist und mindestens zwei Rückstelleinheiten (18') mit jeweils mindestens einem Befestigungsarm (18b) und jeweils einem Federarm (18a) aufweist, wobei die Rückstelleinheiten (18') an den seitlichen Bereichen der Druckseite (4b) der Belagträgerplatte (4) des rückenseitigen Bremsbelags (3') symmetrisch zu einer in Bezug auf eine Bremsscheibendrehachse (2a) der Bremsscheibe (2) radialen Querachse der Belagträgerplatte (4) angebracht sind.

10. Scheibenbremse (10) nach Anspruch 9,
**dadurch gekennzeichnet, dass**
das jeder Federarm (18a) der mindestens zwei Rückstelleinheiten (18') mit dem Bremsträger (6) als ortsfeste Referenz verbunden ist.

11. Scheibenbremse (10) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (9) über der Bremsscheibe (2) aufweist, zwei im Bremssattel (1) angeordneten, gegensinnig bewegbaren, jeweils eine Belagträgerplatte (4) und einen darauf befestigten Reibbelag (5) aufweisenden Bremsbelägen (3, 3'), von denen ein aktionsseitiger bzw. zuspannseitiger Bremsbelag (3), mittels einer Zuspanneinrichtung über mindestens einen Bremsstempel gegen die Bremsscheibe (2) pressbar ist, sowie mindestens einer Rückstelleinrichtung (8), mit welcher die Bremsbeläge (3, 3') nach einem bremsbedingten Verschieben und Lösen der Bremse rückführbar sind,
wobei die Bremsbeläge (3, 3') in Belagschächten zwischen jeweils zwei Bremsträgerhörnern (6c, 6'c) angeordnet sind,
wobei die Rückstelleinrichtung (8) mindestens zwei Rückstellelemente (27, 27') pro Bremsbelag (3, 3') aufweist, die zwischen diesem Bremsbelag (3, 3') und einer ortsfesten Referenz angeordnet sind und auf den jeweiligen Bremsbelag (3, 3') eine Rückstellkraft ausüben,
wobei die mindestens zwei Rückstellelemente (27, 27') eine Druckkraft als Rückstellkraft auf den jeweiligen Bremsbelag (3, 3') ausüben, mit welchem die mindestens zwei Rückstellelemente (27, 27') in Kontakt stehen,
wobei von den mindestens zwei Rückstellelementen (27, 27') jeweils eines an einem Bremsträgerhorn (6c, 6'c) eines zugehörigen Belagschachtes des Bremsträgers (6) angebracht ist, wobei der Bremsträger (6) die ortsfeste Referenz bildet,
wobei jedes der mindestens zwei Rückstellelemente (27, 27') eine Halterung (28, 28') und mindestens eine Druckfeder (29, 29'), die in der an dem jeweiligen Bremsträgerhorn (6c, 6'c) in einer Ausnehmung (31, 31') angeordneten Halterung (28, 28') aufgenommen ist, aufweist,
wobei das mindestens eine Rückstellelement (27, 27') zwischen der ortsfesten Referenz und dem Bremsbelag (3, 3') vorgespannt angeordnet ist,
**dadurch gekennzeichnet, dass**
sich die mindestens eine Druckfeder (29, 29') mit einem Federende in der Halterung (28, 28') an einem Auflageabschnitt (28a, 28'a) abstützt und mit dem anderen Federende mit einem Druckabschnitt (30) der Belagträgerplatte (4) des Bremsbelags (3, 3') in Kontakt steht, wobei der Bremsbelag (3, 3') mit einer Kraft beaufschlagt wird, die ihn von der Bremsscheibe (2) wegdrückt.

12. Scheibenbremse (10) nach einem der vorhergehenden Ansprüche,
**dadurch gekennzeichnet, dass**
die Rückstelleinrichtung (8) weiterhin eine an den sich gegenüberliegenden Bremsbelägen (3) angreifenden, entgegen der jeweiligen Zuspannrichtung gleich wirkenden Spreizeinrichtung (22) mit an der jeweiligen Belagträgerplatte (4) angreifenden federnden Spreizelementen aufweist.

13. Scheibenbremse (10) nach Anspruch 12
**dadurch gekennzeichnet, dass**
die Spreizeinrichtung (22) in der zentralen Öffnung (9) angeordnet ist, wobei die Spreizelemente direkt oder indirekt außerhalb der Reibbeläge (5) eines jeden Bremsbelags (3, 3') an mindestens zwei zur Mitte abständig zueinander angeordneten Anlagebereichen der Bremsbeläge (3, 3') angreifen, wobei die Spreizeinrichtung Federarme (23) aufweist, die in dem zentralen Bereich der Öffnung (9) miteinander und mit einem Haltebügel (25), der am Bremsträger (6) angebracht ist, verbunden sind.

14. Scheibenbremse nach Anspruch 13,
**dadurch gekennzeichnet, dass**
der Haltebügel (25) im Bereich eines zuspannseitigen Rands der Öffnung (9) angeordnet ist.

15. Scheibenbremse nach Anspruch 14,
**dadurch gekennzeichnet, dass**
der Haltebügel (25) zwischen dem Bremsträger (6) und Führungsholmen (26b) von Axiallagern des Bremssattels (1) am Bremssattel (6) angebracht ist.

16. Scheibenbremse (10) nach einem der Ansprüche 13 bis 15,
**dadurch gekennzeichnet, dass**
sich die Spreizelemente ausgehend von dem zentralen Bereich in der Mitte der Öffnung (9) von innen nach außen zu den gleichmäßig zur Mitte abständig zueinander angeordneten Anlagebereichen erstrecken.

17. Scheibenbremse (10) nach einem der Ansprüche 13 bis 16,
**dadurch gekennzeichnet, dass**
der sich der zentrale Bereich der Öffnung (9) beiderseits einer virtuellen Mitte der Öffnung (9) in etwa parallel zu der Ebene der Bremsscheibe (2) in einer Länge in einem Bereich von 30 bis 50 % einer Längsachse der Öffnung (9) erstreckt.

18. Scheibenbremse (10) nach einem der Ansprüche 13 bis 17,
**dadurch gekennzeichnet, dass**
von den Federarmen (23) jeweils zwei an einer Belagseite (4a) einer zugeordneten Belagträgerplatte (4) eines zugeordneten Bremsbelags (3, 3') über jeweils ein Druckende (23b) anliegen.

19. Scheibenbremse nach einem der Ansprüche 13 bis 18,
**dadurch gekennzeichnet, dass**
die Federarme (23) über eine Halteeinrichtung (24) mit dem Haltebügel (25) verbunden sind, wobei die Halteeinrichtung (24) zwei Haltearme (24a) aufweist, von denen sich jeder bis über den Haltebügel (25) erstreckt und mit diesem fest verbunden ist.

20. Scheibenbremse (10) nach einem der Ansprüche 13 bis 19,
**dadurch gekennzeichnet, dass**
das mindestens eine Rückstellelement (17) an dem zuspannseitigen Bremsbelag (3) angebracht ist und mit mindestens einen Federarm (17d) mit dem Bremsträger (6) als ortsfeste Referenz über den Haltebügel (25), an welchem die Spreizeinrichtung (22) angebracht ist, verbunden ist.

21. Scheibenbremse (10) nach einem der vorhergehenden Ansprüche,
**dadurch gekennzeichnet, dass**
das mindestens eine Rückstellelement (17, 18, 27, 27') zumindest in einem dritten Angriffspunkt im Bereich des mittleren Reibradius, des Schwerpunkts oder mittig, d.h. zentral im Schnittpunkt einer gedachten Querachse und Längsachse des Bremsbelags (3, 3'), symmetrisch zur Querachse an zwei Anlagebereichen rechts und links davon auf der Längsachse oder/und in einem unteren Randbereich des Bremsbelags (3, 3') angreift und ein durch eine Spreizeinrichtung (22) erzeugtes Kippmoment verringert.

22. Bremsbelagsatz für eine Scheibenbremse (10) nach einem der Ansprüche 1 bis 10, aufweisend mindestens zwei Bremsbeläge (3, 3') mit jeweils einer Belagträgerplatte (4) und einem auf der Belagträgerplatte (4) angebrachten Reibbelag (5),
wobei mindestens einer der Bremsbeläge (3, 3') mit mindestens einem Rückstellelement (17) versehen ist,
wobei das mindestens eine Rückstellelement (17) an einer Druckseite (4b) einer Belagträgerplatte (4) des Bremsbelags (3, 3') angebracht ist,
wobei das mindestens eine Rückstellelement (17) mit Befestigungsarmen (17b) an der Belagträgerplatte (4) des Bremsbelags (3, 3') zentral, an einem oberen, unteren oder/und seitlich liegenden Randbereich der Belagträgerplatte (4) angebracht ist,
**dadurch gekennzeichnet, dass**
das mindestens eine Rückstellelement (17) zentral an der Belagträgerplatte (4) eines zuspannseitigen Bremsbelags (3) auf der Druckseite (4b) dergestalt angebracht, dass Befestigungsenden (17c) oberer Befestigungsarme (17b) eine Oberseite (4c) der Belagträgerplatte (4) umgreifen und Befestigungsenden (17c) unterer Befestigungsarme (17b) eine Unterseite (4c) der Belagträgerplatte (4) umgreifen, wobei das mindestens eine Rückstellelement (17) als eine Art Klammer an dem zuspannseitigen Bremsbelag (3) angebracht ist.

23. Bremsbelagsatz nach Anspruch 22,
**dadurch gekennzeichnet, dass**
der Bremsbelagsatz einen Haltebügel (25) aufweist, mit welchem das mindestens eine Rückstellelement (17) verbindbar ist.

24. Bremsbelagsatz für eine Scheibenbremse (10) nach einem der Ansprüche 1 bis 8, aufweisend mindestens zwei Bremsbeläge (3, 3') mit jeweils einer Belagträgerplatte (4) und einem auf der Belagträgerplatte (4) angebrachten Reibbelag (5),
wobei mindestens einer der Bremsbeläge (3, 3') mit mindestens einem Rückstellelement (18) versehen ist,
wobei das mindestens eine Rückstellelement (18) an einer Druckseite (4b) einer Belagträgerplatte (4) des Bremsbelags (3, 3') angebracht ist,
wobei das mindestens eine Rückstellelement (18) mit Befestigungsarmen (18b) an der Belagträgerplatte (4) des Bremsbelags (3, 3') zentral, an einem oberen, unteren oder/und seitlich liegenden Randbereich der Belagträgerplatte (4) angebracht ist,,
**dadurch gekennzeichnet, dass**
ein rückenseitiger Bremsbelag (3') mit dem mindestens einen Rückstellelement (18) versehen ist, wobei das mindestens eine Rückstellelement (18) zwei Federarme (18a), zwei Befestigungsarme (18b) und einen Stützabschnitt (18f) umfasst, und mit jeweils einem Befestigungsarm (18b) an jeweils einem seitlichen Bereich an einer Druckseite (4b) der Belagträgerplatte (4) des rückenseitigen Bremsbelags (3') angebracht ist, wobei die Federarme (18a) mit ihren gegenüberliegenden Enden zusammen verbunden oder einstückig ausgebildet sind, wobei in ihrem Verbindungsbereich der Stützabschnitt (18f) in Form eines U-förmigen Bügels angebracht ist, wobei an den freien Enden der Federarme (18a) jeweils einer der Befestigungsarme (18b) angebracht ist, und wobei sich die verbundenen Federarme (18a) in einer Form korrespondierend zu der geschwungenen Kontur des unteren Randbereichs der Druckseite (4b) der Belagträgerplatte (4) des rückenseitigen Bremsbelags (3') bis zu den unteren Enden der Belagträgerplatte (4) erstrecken.

25. Bremsbelagsatz für eine Scheibenbremse (10) nach Anspruch 9, aufweisend mindestens zwei Bremsbeläge (3, 3') mit jeweils einer Belagträgerplatte (4) und einem auf der Belagträgerplatte (4) angebrachten Reibbelag (5), wobei mindestens einer der Bremsbeläge (3, 3') mit mindestens einem Rückstellelement (18) versehen ist,
wobei das mindestens eine Rückstellelement (18) an einer Druckseite (4b) einer Belagträgerplatte (4) des Bremsbelags (3, 3') angebracht ist,
wobei das mindestens eine Rückstellelement (18) mit Befestigungsarmen (18b) an der Belagträgerplatte (4) des Bremsbelags (3, 3') zentral, an einem oberen, unteren oder/und seitlich liegenden Randbereich der Belagträgerplatte (4) angebracht ist,
wobei ein rückenseitiger Bremsbelag (3') mit dem mindestens einen Rückstellelement (18) versehen ist, wobei das mindestens eine Rückstellelement (18) mindestens zwei Rückstelleinheiten (18') mit jeweils mindestens einem Befestigungsarm (18b) und jeweils einem Federarm (18a) aufweist, wobei die Rückstelleinheiten (18') jeweils an den seitlichen Bereichen der Druckseite (4b) der Belagträgerplatte (4) des rückenseitigen Bremsbelags (3') symmetrisch zu einer in Bezug auf eine Bremsscheibendrehachse (2a) der zuzuordnenden Bremsscheibe (2) radialen Querachse der Belagträgerplatte (4) angebracht sind,
**dadurch gekennzeichnet, dass**
sich ein jeweiliger Befestigungsarm (18b) einer jeweiligen Rückstelleinheit (18') nach unten parallel zu der radialen Querachse der Belagträgerplatte (4) erstreckt und etwa in der Mitte der Schmalseite der Druckseite (4b) der Belagträgerplatte (4) mit seinem unteren Ende fixiert ist, wobei dieses untere Ende des Befestigungsarms (18b) in einem Knick in den Federarm (18a) übergeht, welcher so von der Druckseite (4b) schräg hervorsteht und sich weiter nach unten parallel zu der radialen Querachse der Belagträgerplatte (4) erstreckt.

26. Bremsbelagsatz für eine Scheibenbremse (10) nach Anspruch 9, aufweisend mindestens zwei Bremsbeläge (3, 3') mit jeweils einer Belagträgerplatte (4) und einem auf der Belagträgerplatte (4) angebrachten Reibbelag (5), wobei mindestens einer der Bremsbeläge (3, 3') mit mindestens einem Rückstellelement (18) versehen ist,
wobei das mindestens eine Rückstellelement (18) an einer Druckseite (4b) einer Belagträgerplatte (4) des Bremsbelags (3, 3') angebracht ist,
wobei das mindestens eine Rückstellelement (18) mit Befestigungsarmen (18b) an der Belagträgerplatte (4) des Bremsbelags (3, 3') zentral, an einem oberen, unteren oder/und seitlich liegenden Randbereich der Belagträgerplatte (4) angebracht ist,,
wobei ein rückenseitiger Bremsbelag (3') mit dem mindestens einen Rückstellelement (18) versehen ist, wobei das mindestens eine Rückstellelement (18) mindestens zwei spiegelbildlich ausgeführte Rückstelleinheiten (18') mit jeweils einem Federarm (18a) mit zwei parallelen Federlaschen (18h), mit einem Befestigungsarm (18b) und mit einem Stützabschnitt (18f) aufweist, und wobei eine jeweilige Rückstelleinheit (18') mit ihrem Befestigungsarm (18b) in einem der beiden unteren Eckabschnitten (4h) der Belagträgerplatte (4) des rückenseitigen Bremsbelags (3') angebracht ist,
wobei an einem Ende des Befestigungsarms (18b) ein Befestigungsende (18c) um ca. 90° umgekantet angebracht ist, an dessen freiem Ende ein ebenfalls um 90° umgekanteter Endabschnitt (18d) angeformt ist,
wobei an dem anderen Ende des Befestigungsarms (18b) ein um 90° abgekanteter Verbindungsabschnitt (18i) von der Druckseite (4b) der Belagträgerplatte (4) hervorsteht, welcher an seinem freien Ende mit einer um 90° nach außen umgekanteten ersten Federlasche (18h) des Federarms (18a) verbunden ist, **dadurch gekennzeichnet, dass**
parallel zu der ersten Federlasche (18h) eine weitere, zweite Federlasche (18h) angeordnet ist, die mit ihrem äußeren Ende mit dem äußeren Ende der ersten Federlasche (18h) verbunden ist, wobei das innere Ende dieser zweiten Federlasche (18h) mit einem rechtwinklig, von der Druckseite (4b) der Belagträgerplatte (4) wegweisend hervorstehenden Verbindungsabschnitt (18j) verbunden, ist, wobei der Verbindungsabschnitt (18j) um seine Längsachse verwunden ist und an seinem Ende in einen hakenförmigen, nach unten weisenden und sich parallel zu einer radialen Querachse der Belagträgerplatte (4) erstreckenden Stützabschnitt (18f) übergeht.

27. Bremsbelagsatz nach einem der Ansprüche 22 bis 26,
**dadurch gekennzeichnet, dass**
der Bremsbelagsatz zudem eine Spreizeinrichtung (22) mit einem Haltebügel (25) aufweist.

## Claims

1. A disk brake (10) for a utility vehicle, having a brake calliper (1) that engages over a brake disk (2), is configured as a sliding calliper, is fastened to a positionally fixed brake carrier (6) and has a central opening (9) above the brake disk (2); two brake pads (3, 3') that are arranged in the brake calliper (1), can be moved in opposite directions and each have a pad carrier plate (4) to which a friction lining (5) is fastened, it being possible to press an action-side or application-side brake pad (3) against the brake disk (2) via at least one brake plunger by means of a brake application device; and at least one restoring device (8) by means of which the brake pads (3, 3') can be returned after the braking-induced movement and release of the brake, the brake pads (3, 3') being arranged in pad slots between pairs of brake carrier horns (6, 6'), and portions of their undersides (4d) sitting on bearing faces of a pad slot base of the brake carrier (6) formed by a bridge arch (6d, 6'd) of the brake carrier (6),
the restoring device (8) having at least one restoring element (17, 18) that is attached to a brake pad (3, 3'), is arranged between this brake pad (3, 3') and a positionally fixed reference, and exerts a restoring force on the brake pad (3, 3'),
the at least one restoring element (17, 18) exercising a traction force as a restoring force on the brake pad (3, 3') to which the at least one restoring element (17, 18) is attached,
fastening arms (17b; 18b) of the at least one restoring element (17, 18) being attached to a pressure side (4b) of a pad carrier plate (4) of the brake pad (3, 3'), the at least one restoring element (17,18) being attached centrally to an upper, lower and/or lateral edge region of the pad carrier plate (4) on the pad carrier plate (4) of the brake pad (3, 3'), at least one spring arm (17d, 17f; 18a) of the at least one restoring element (17, 18) being connected to the positionally fixed reference,
**characterised in that**
the at least one spring arm (17f; 18a) of the at least one restoring element (17, 18) is connected to the bridge arch (6d, 6'd) of the brake carrier (6) as a positionally fixed reference.

2. A brake disk (10) according to claim 1,
**characterised in that**
the at least one restoring element (17, 18) is attached pre-tensioned between the positionally fixed reference and the brake pad (3, 3').

3. A disk brake (10) according to claim 1 or 2,
**characterised in that**
in relation to the brake disk (2), at least undersides of the fastening arms (17b; 18b) of the at least one restoring element (17, 18) lie in a vertical plane parallel to a plane of the brake disk (2).

4. A disk brake (10) according to any one of the preceding claims,
**characterised in that,**
the at least one fastening arm (17d, 17f; 18a) of the at least one restoring element (17, 18) is connected to the pad carrier (6) as a positionally fixed reference.

5. A disk brake (10) according to any one of the preceding claims,
**characterised in that**
the at least one restoring spring (17, 18) is attached to the application-side brake pad (3) and connected by at least one spring arm (17d) via a retaining bracket (25) to the brake carrier (6) as a positionally fixed reference.

6. A disk brake (10) according to claim 5,
**characterised in that**
the at least one restoring element (17) is attached to the application-side brake pad (3), is connected by at least one spring arm (17d) via a retaining bracket (25) to the brake carrier (6) as a positionally fixed reference and is also connected by at least one further spring arm (17f) to the bridge arch (6d, 6'd) of the brake carrier (6) as a positionally fixed reference.

7. A disk brake (10) according to claim 5 or 6,
**characterised in that**
the retaining bracket (25) is attached to the brake calliper (6) between the brake carrier (6) and guide rods (26b) of axial bearings of the brake calliper (1).

8. A disk brake (10) according to any one of the preceding claims,
**characterised in that**
at least one fastening arm (18b) of the at least one restoring element (18) is attached to the rear brake pad (3') at a lateral region of a pressure side (4b) of the pad carrier late (4) of the rear brake pad (3') and connected centrally by two spring arms (18a) at a bridge arch (6d') of the brake carrier (6) as a positionally fixed reference.

9. A disk brake (10) according to any one of claims 1 to 7,
**characterised in that**
the at least one restoring element (18) is attached to the rear brake pad (3') and has at least two restoring units (18'), each having at least one fastening arm (18b) and a spring arm (18a), the restoring units (18') being attached to the lateral regions of the pressure side (4b) of the pad carrier plate (4) of the rear brake pad (3') in a manner symmetrical to a transverse axis of the pad carrier plate (4) that is radial in relation to a brake disc axis of rotation (2a) of the associated brake disk (2).

10. A disk brake (10) according to claim 9,
**characterised in that**
each spring arm (18a) of the at least two restoring units (18') is connected to the brake carrier (6) as a positionally fixed reference.

11. A disk brake (10) for a utility vehicle, having a brake calliper (1) that engages over a brake disk (2), is configured as a sliding calliper, is fastened to a positionally fixed brake carrier (6) and has a central opening (9) above the brake disk (2); two brake pads (3, 3') that are arranged in the brake calliper (1), can be moved in opposite directions and each have a pad carrier plate (4) to which a friction lining (5) is fastened, it being possible to press an action-side or application-side brake pad (3) against the brake disk (2) via at least one brake plunger by means of a brake application device; and at least one restoring device (8) by means of which the brake pads (3, 3') can be returned after the braking-induced movement and release of the brake,
the brake pads (3, 3') being arranged in pad slots between pairs of brake carrier horns (6c, 6c'),
the restoring device (8) having at least two restoring elements (27, 27') per brake pad (3, 3') that are arranged between this brake pad (3, 3') and a positionally fixed reference and exerting a restoring force on the brake pad (3, 3'),
the at least two restoring elements (27, 27') exerting a compression force as a restoring force on the brake pad (3, 3') with which the at least two restoring elements (27, 27') are in contact,
one of the at least two restoring elements (27, 27') being attached to a brake carrier horn (6c, 6'c) of an associated pad slot of the brake carrier (6), the brake carrier (6) forming the positionally fixed reference,
each of the at least two restoring elements (27, 27') having a mounting (28, 28') and at least one compression spring (29, 29') that is received in the mounting (28, 28') that is arranged in a recess (31, 31') on the brake carrier horn (6c, 6'c),
the at least one restoring element (27, 27') being arranged pre-tensioned between the positionally fixed reference and the brake pad (3, 3'),
**characterised in that**
a spring end of the at least one compression spring (29, 29') sits on a bearing portion (28a, 28'a) in the mounting (28, 28'), while the other spring end is in contact with a pressure portion (30) of the pad carrier plate (4) of the brake pad (3, 3'), a force being applied to the brake pad (3, 3') and pressing it away from the brake disk (2).

12. A disk brake (10) according to any one of the preceding claims,
**characterised in that,**
the restoring device (8) also has a spreading device (22) that acts on the brake pads (3), which are located opposite one another, acts against the brake application direction in the same manner, and has sprung spreading elements that act on the pad carrier plate (4).

13. A disk brake (10) according to claim 12,
**characterised in that**
the spreading device (22) is arranged in the central opening (9), the spreading elements acting directly or indirectly outside the friction linings (5) of each brake pad (3, 3') in at least two contact regions of the brake pads (3, 3'), these contact regions being arranged at a distance from the centre in relation to one another, the spreading device having spring arms (23) that are connected to one another and to a retaining bracket (25, which is attached to the brake carrier (6), in the central region of the opening (9).

14. A disk brake according to claim 13,
**characterised in that**
the retaining bracket (25) is arranged in the region of an application-side edge of the opening (9).

15. A disk brake according to claim 14,
**characterised in that**
the retaining bracket (25) is attached to the brake calliper (6) between the brake carrier (6) and guide rods (26b) of axial bearings of the brake calliper (1).

16. A disk brake (10) according to any one of claims 13 to 15,
**characterised in that**
starting from the central region in the centre of the opening (9), the spreading elements extend from the inside to the outside to the contact regions that are arranged at an equal distance from the centre in relation to one another.

17. A disk brake (10) according to any one of claims 13 to 16,
**characterised in that**
the central region of the opening (9) extends on either side of a virtual centre of the opening (9) approximately parallel to the plane of the brake disk (2) over a length of 30 to 50% of the longitudinal axis of the opening (9).

18. A disk brake (10) according to any one of claims 13 to 17,
**characterised in that,**
the pressure ends (23b) of two of the spring arms (23) abut a pad side (4a) of an associated pad carrier plate (4) of an associated brake pad (3, 3').

19. A disk brake according to any one of claims 13 to 18,
**characterised in that**
the spring arms (23) are connected to the retaining bracket (25) via a retaining device (24), this retaining device (24) having two retaining arms (24a), each of which extends beyond the retaining bracket (25) and is connected permanently to it.

20. A disk brake (10) according to any one of claims 13 to 19,
**characterised in that**
the at least one restoring element (17) is attached to the application-side brake pad (3) and is connected by at least one spring arm (17d) via the retaining bracket (25) to which the spreading device (22) is attached to the brake carrier (6) as a positionally fixed reference.

21. A disk brake (10) according to any one of the preceding claims,
**characterised in that**
the at least one restoring element (17, 18, 27, 27') acts at least at one third action point in the region of the mean friction radius, the centroid or centrally, i.e. centrally at the point of intersection of a notional transverse axis and a notional longitudinal axis of the brake pad (3, 3'), symmetrically in relation to the transverse axis on two contact regions to the right and left thereof on the longitudinal axis and/or in a lower edge region of the brake pad (3, 3'), and reduces the tilting moment generated by a spreading device (22).

22. A disk brake set for a disk brake (10) according to any one of claims 1 to 10, having at least two brake pads (3, '3), each with a pad carrier plate (4) and a friction pad (5) attached to the pad carrier plate (4),
at least one of the brake pads (3, 3') being provided with at least one restoring element (17),
the at least one restoring element (17) being attached to a pressure side (4b) of a pad carrier plate (4) of the brake pad (3, 3'),
fastening arms (17b) of the at least one restoring element (17) being attached centrally to an upper, lower and/or lateral edge region of the pad carrier plate (4) on the pad carrier plate (4) of the brake pad (3, 3'),
**characterised in that**
the at least one restoring element (17) is attached centrally to the pad carrier plate (4) of an application-side brake pad (3) on the pressure side (4) such that fastening ends (17c) of upper fastening arms (17b) engage around an upper side (4c) of the pad carrier plate (4) and fastening ends (17c) of lower fastening arms (17) engage around an underside (4c) of the pad carrier plate (4), the at least one restoring element (17) being attached to the application-side brake pad as a sort of bracket.

23. A brake pad set according to claim 22,
**characterised in that**
the brake pad set has a retaining bracket (25) to which the at least one restoring element (17) can be connected.

24. A disk brake set for a disk brake (10) according to any one of claims 1 to 8, having at least two brake pads (3, '3), each with a pad carrier plate (4) and a friction pad (5) attached to the pad carrier plate (4),
at least one of the brake pads (3, 3') being provided with at least one restoring element (18),
the at least one restoring element (18) being attached to a pressure side (4b) of a pad carrier plate (4) of the brake pad (3, 3'),
fastening arms (18b) of the at least one restoring element (18) being attached centrally to an upper, lower and/or lateral edge region of the pad carrier plate (4) on the pad carrier plate (4) of the brake pad (3, 3'),
**characterised in that**
a rear brake pad (3') is provided with the at least one restoring element (18), the at least one restoring element (18) comprising two spring arms (18a), two fastening arms (18b) and a supporting portion (18f), each fastening arm (18b) being attached to a lateral region on a pressure side (4b) of the pad carrier plate (4) of the rear brake pad (3'), the opposing ends of the spring arms (18a) being connected together or configured in one piece, the supporting portion (18f) in the form of a U-shaped bracket being attached in their connecting regions, one of the fastening arms (18b) being attached to the free ends of the spring arms (18a), and the connected spring arms (18a) extending to the lower ends of the pad carrier plate (4) in a form corresponding to the curved contour of the lower edge region of the pressure side (4b) of the pad carrier plate (4) of the rear brake pad (3').

25. A disk brake set for a disk brake (10) according to claim 9, having at least two brake pads (3, '3), each with a pad carrier plate (4) and a friction pad (5) attached to the pad carrier plate (4),
at least one of the brake pads (3, 3') being provided with at least one restoring element (18),
the at least one restoring element (18) being attached to a pressure side (4b) of a pad carrier plate (4) of the brake pad (3, 3'),
fastening arms (18b) of the at least one restoring element (18) being attached centrally to an upper, lower and/or lateral edge region of the pad carrier plate (4) on the pad carrier plate (4) of the brake pad (3, 3'),
a rear brake pad (3') being provided with the at least one restoring element (18), the at least one restoring element (18) having at least two restoring units (18'), each with at least one fastening arm (18b) and a spring arm (18a), the restoring units (18') being attached to the lateral regions of the pressure side (4b) of the pad carrier plate (4) of the rear brake pad (3') in a manner symmetrical to a transverse axis of the pad carrier plate (4) that is radial in relation to a brake disc axis of rotation (2a) of the associated brake disk (2).
**characterised in that**
a fastening arm (18b) of a restoring unit (18') extends downwards parallel to the radial transverse axis of the brake carrier pad (4) and its lower end is fixed approximately in the centre of the narrow side of the pressure side (4b) of the pad carrier plate (4), this lower end of the fastening arm (18b) transitioning into a kink in the spring arm (18a) that thus projects obliquely from the pressure side (4b) and extends further downwards parallel to the radial transverse axis of the pad carrier plate (4).

26. A disk brake set for a disk brake (10) according to claim 9, having at least two brake pads (3, '3), each with a pad carrier plate (4) and a friction pad (5) attached to the pad carrier plate (4),
at least one of the brake pads (3, 3') being provided with at least one restoring element (18),
the at least one restoring element (18) being attached to a pressure side (4b) of a pad carrier plate (4) of the brake pad (3, 3'),
fastening arms (18b) of the at least one restoring element (18) being attached centrally to an upper, lower and/or lateral edge region of the pad carrier plate (4) on the pad carrier plate (4) of the brake pad (3, 3'),
a rear brake pad (3') being provided with the at least one restoring element (18), the at least one restoring element (18) having at least two mirror-inverted restoring units (18') that each have a spring arm (18a) with two parallel spring clips (18h), with a fastening arm (18b) and with a supporting portion (18f), and the fastening arm (18b) of each restoring unit (18') being attached in one of the two lower corner portions (4h) of the pad carrier plate (4) of the rear brake pad (3'),
a fastening end (18c) that is bent over by approx. 90° being attached to one end of the fastening arm (18b), an end portion (18d) that is also bent over by approx. 90° being integrally formed on the free end of this fastening end (18c),
at the other end of the fastening arm (18b) a connecting portion (18i) that is bent by approx. 90° projecting from the pressure side (4b) of the pad carrier plate (4), its free end being connected to a first spring clip (18h) of the spring arm (18a), this spring clip (18h) being bent outwards by approx. 90°,
**characterised in that**
a further second spring clip (18h) is arranged parallel to the first spring clip (18h) and the outer end of this second spring clip (18h) is connected to the outer end of the first spring clip (18h), the inner end of this second spring clip (18h) being connected to a connecting portion (18j) that projects at right angles and points away from the pressure side (4b) of the pad carrier plate (4), the connecting portion (18j) being wound about its longitudinal axis and its end transitioning into a hook-shaped, downward pointing supporting portion (18f) that extends parallel to a radial transverse axis of the pad carrier plate (4).

27. A brake pad set according to any one of claims 22 to 26,
**characterised in that**
the brake pad set also has a spreading device (22) with a retaining bracket (25).

## Revendications

1. Frein (10) à disque d'un véhicule utilitaire, comprenant un étrier (1) de frein, qui chevauche un disque (2) de frein, qui est constitué en étrier coulissant, qui est fixé à un support (6) de frein fixe et qui a une ouverture (9) centrale au-dessus du disque (2) de frein, deux garnitures (3, 3') de frein, qui sont montées dans l'étrier (1) de frein, qui sont mobiles en sens contraire, qui ont chacune une plaque (4) de support de garniture et une garniture (5) de friction qui y est fixée, dont une garniture (3) de frein du côté de l'action ou respectivement du côté de serrage peut, au moyen d'un dispositif de serrage par au moins un piston de frein, être pressée sur le disque (2) de frein, ainsi qu'au moins un dispositif (8) de rappel, par lequel les garnitures (3, 3') de frein peuvent, après un déplacement dû au freinage et un desserrage du frein, être rappelées, dans lequel les garnitures (3, 3') de frein sont disposées dans des puits de garniture entre respectivement deux cornes (6c, 6'c) du support de frein et s'appliquent par des parties de leurs côtés (4d) inférieurs à des supports respectifs d'un fond respectif de puits de garniture, formé par une arche (6d, 6'd) du support (6) de frein, du support (6) de frein,
dans lequel le dispositif (8) de rappel a au moins un élément (17, 18) de rappel, qui est mis sur une garniture (3, 3') de frein, qui est disposé entre cette garniture (3, 3') de frein et une référence fixe et qui applique une force de rappel à la garniture (3, 3') de frein, dans lequel
le au moins un élément (17, 18) de rappel applique une force de traction comme force de rappel à la garniture (3, 3') de frein, sur laquelle est mis le au moins un élément (17, 18) de rappel, dans lequel
le au moins un élément (17, 18) de rappel est mis sur une face (4b) de poussée d'une plaque (4) du support de garniture de la garniture (3, 3') de frein,
dans lequel le au moins un élément (17, 18) de rappel est mis par des bras (17b ; 18b) de fixation sur la plaque (4) de support de garniture de la garniture (3, 3') de frein centralement sur une partie de bord supérieure, inférieure ou/et latérale de la plaque (4) de support de garniture, dans lequel le au moins un élément (17, 18) de rappel est relié à la référence fixe par au moins un bras (17d, 17f ; 18a) de ressort,
**caractérisé en ce que**
le au moins un élément (17, 18) de rappel est relié à l'arche (6d, 6'd) respective du support (6) de frein comme référence fixe par le au moins un bras (17f ; 18a) de ressort.

2. Frein (10) à disque suivant la revendication 1,
**caractérisé en ce que**
le au moins un élément (17, 18) de rappel est monté en étant précontraint entre la référence fixe et la garniture (3, 3') de frein.

3. Frein (10) à disque suivant la revendication 1 ou 2,
**caractérisé en ce que**
le au moins un élément (17, 18) de rappel est, au moins par des côtés inférieurs des bras (17b ; 18b) de fixation par rapport au disque (2) de frein dans un plan vertical, parallèlement à un plan du disque (2) de frein.

4. Frein (10) à disque suivant l'une des revendications précédentes,
**caractérisé en ce que**
le au moins un élément (17, 18) de rappel est relié au support (6) de frein comme référence fixe par le au moins un bras (17d, 17f ; 18a) de ressort.

5. Frein (10) à disque suivant l'une des revendications précédentes,
**caractérisé en ce que**
le au moins un élément (17) de rappel est mis sur la garniture (3) de frein du côté du serrage et est relié, par l'intermédiaire d'un collier (25) de maintien, au support (6) de frein comme référence fixe par au moins un bras (17d) de ressort.

6. Frein (10) à disque suivant la revendication 5,
**caractérisé en ce que**
le au moins un élément (17) de rappel est mis sur la garniture (3) de frein du côté du serrage et est relié, par l'intermédiaire du collier (25) de maintien, au support (6) de frein comme référence fixe par au moins un bras (17d) de ressort et est relié en outre à l'arche (6d, 6'd) du support (6) de frein comme référence fixe par au moins un autre bras (17f) de ressort.

7. Frein (10) à disque suivant la revendication 5 ou 6,
**caractérisé en ce que**
le collier (25) de maintien est mis sur l'étrier (6) de frein entre le support (6) de frein et des longerons (26b) de guidage de paliers axiaux de l'étrier (1) de frein.

8. Frein (10) à disque suivant l'une des revendications précédentes,
**caractérisé en ce que**
le au moins un élément (18) de rappel sur la garniture (3') de frein du côté du dos est mis par respectivement au moins un bras (18b) de fixation sur respectivement une partie latérale d'une face (4b) de poussée de la plaque (4) de support de garniture de la garniture (3') de frein du côté du dos et est relié à deux bras (18a) de ressort au milieu sur une arche (6'd) du support (6) de frein comme référence fixe.

9. Frein (10) à disque suivant l'une des revendications 1 à 7,
**caractérisé en ce que**
le au moins un élément (18) de rappel est mis sur la garniture (3') de frein du côté du dos, et a au moins deux unités (18') de rappel ayant chacune au moins un bras (18b) de fixation et chacune un bras (18a) de ressort, dans lequel les unités (18') de rappel sont mises sur les parties latérales de la face (4b) de poussée de la plaque (4) de support de garniture de la garniture (3') de frein du côté du dos, de manière symétrique par rapport à un axe transversal, radial par rapport à un axe (2a) de rotation du disque (2) de frein, de la plaque (4) de support de garniture.

10. Frein (10) à disque suivant la revendication 9,
**caractérisé en ce que**
chaque bras (18a) de ressort des au moins deux unités (18') de rappel est relié au support (6) de frein comme référence fixe.

11. Frein (10) à disque d'un véhicule utilitaire, comprenant un étrier (1) de frein, qui chevauche un disque (2) de frein, qui est constitué en étrier coulissant, qui est fixé à un support (6) de frein fixe et qui a une ouverture (9) centrale au-dessus du disque (2) de frein, deux garnitures (3, 3') de frein, qui sont montées dans l'étrier (1) de frein, qui sont mobiles en sens contraire, qui ont chacune une plaque (4) de support de garniture et une garniture (5) de friction qui y est fixée, dont une garniture (3) de frein du côté de l'action ou respectivement du côté de serrage peut, au moyen d'un dispositif de serrage par au moins un piston de frein, être pressée sur le disque (2) de frein, ainsi qu'au moins un dispositif (8) de rappel, par lequel les garnitures (3, 3') de frein peuvent, après un déplacement dû au freinage et un desserrage du frein, être rappelées,
dans lequel les garnitures (3, 3') de frein sont disposées dans des puits de garniture entre respectivement deux cornes (6c, 6'c) du support de frein,
dans lequel le dispositif (8) de rappel a au moins deux éléments (27, 27') de rappel par garniture (3, 3') de frein, qui sont montés entre cette garniture (3, 3') de frein et une référence fixe et qui applique une force de rappel à la garniture (3, 3') de frein respective,
dans lequel, les au moins deux éléments (27, 27') de rappel appliquent une force de poussée comme force de rappel à la garniture (3, 3') respective de frein avec laquelle les au moins deux éléments (27, 27') de rappel sont en contact,
dans lequel, parmi les au moins deux éléments (27, 27') de rappel, l'un respectivement est mis sur une corne (6c, 6'c) de support de frein d'un puits de garniture, lui appartenant, du support (6) de frein, le support (6) de frein formant la référence fixe,
dans lequel chacun des au moins deux éléments (27, 27') de rappel a une fixation (28, 28') et au moins un ressort (29, 29') de compression, qui est reçu dans la fixation (28, 28') montée sur la corne (6c, 6'c) respective de support de frein dans un évidement (31, 31'),
dans lequel le au moins un élément (27, 27') de rappel est monté en étant précontraint entre la référence fixe et la garniture (3, 3') de frein,
**caractérisé en ce que**
le au moins un ressort (29, 29') de compression s'appuie par une extrémité dans la fixation (28, 28') sur une partie (28a, 28'a) de support et est en contact par l'autre extrémité avec une partie (30) de poussée de la plaque (4) de support de garniture de la garniture (3, 3') de frein, la garniture (3, 3') de frein étant soumise à une force, qui la repousse du disque (2) de frein.

12. Frein (10) à disque suivant l'une des revendications précédentes,
**caractérisé en ce que**
le dispositif (8) de rappel a en outre un dispositif (22) d'écartement attaquant les garnitures (3) de frein opposées, agissant également à l'encontre du sens respectif de serrage par des éléments d'écartement élastiques attaquant la plaque (4) respective de support de garniture.

13. Frein (10) à disque suivant la revendication 12,
**caractérisé en ce que**
le dispositif (22) d'écartement est disposé dans l'ouverture (9) centrale, dans lequel les éléments d'écartement attaquent directement ou indirectement à l'extérieur des garnitures (5) de friction d'une garniture (3, 3') de frein respective au moins deux parties de contact, disposées l'une par rapport à l'autre à distance du milieu, des garnitures (3, 3') de frein, le dispositif d'écartement ayant des bras (23) de ressort, qui sont reliés entre eux dans la partie centrale de l'ouverture (9) et un collier (25) de maintien, qui est mis sur le support (6) de frein.

14. Frein (10) à disque suivant la revendication 13,
**caractérisé en ce que**
le collier (25) de maintien est mis dans la partie d'un bord, du côté du serrage, de l'ouverture (9).

15. Frein (10) à disque suivant la revendication 14,
**caractérisé en ce que**
le collier (25) de maintien est mis sur l'étrier (6) de frein entre le support (6) de frein et des longerons (26b) de guidage de paliers axiaux de l'étrier (1) de frein.

16. Frein (10) à disque suivant l'une des revendications 13 à 15,
**caractérisé en ce que**
les éléments d'écartement s'étendent de la partie centrale au milieu de l'ouverture (9) de l'intérieur vers l'extérieur vers les parties de contact disposées également l'un par rapport à l'autre à égale distance du milieu.

17. Frein (10) à disque suivant l'une des revendications 13 à 16,
**caractérisé en ce que**
la partie centrale de l'ouverture (9) s'étend des deux côtés d'un milieu virtuel de l'ouverture (9) à peu près parallèlement au plan du disque (2) de frein en une longueur dans une partie de 30 à 50% d'un axe longitudinal de l'ouverture (9).

18. Frein (10) à disque suivant l'une des revendications 13 à 17,
**caractérisé en ce que**
parmi les bras (23) de ressort, deux respectivement s'appliquent, par l'intermédiaire respectivement d'une extrémité (23b) de pression, à une face (4a) de garniture d'une plaque (4) associée de support de garniture d'une garniture (3, 3') de frein associée.

19. Frein (10) à disque suivant l'une des revendications 13 à 18,
**caractérisé en ce que**
les bras (23) de ressort sont reliés au collier (25) de maintien par l'intermédiaire d'un dispositif (24) de maintien, dans lequel le dispositif (24) de maintien a deux bras (24a) de maintien, dont chacun s'étend jusqu'au collier (25) de maintien et est relié fixement à celui-ci.

20. Frein (10) à disque suivant l'une des revendications 13 à 19,
**caractérisé en ce que**
le au moins un élément (17) de rappel est mis sur la garniture (3) de frein du côté du serrage et, par au moins un bras (17d) de ressort, est relié au support (6) de frein comme référence fixe par l'intermédiaire du collier (25) de maintien, sur lequel est mis le dispositif (22) d'écartement.

21. Frein (10) à disque suivant l'une des revendications précédentes,
**caractérisé en ce que**
le au moins un élément (17, 18, 27, 27') de rappel attaque au moins à un troisième point d'attaque, dans la partie du rayon de friction médian, du centre de gravité ou au milieu, c'est-à-dire centralement au point d'intersection d'un axe transversal imaginaire et de l'axe longitudinal de la garniture (3, 3') de frein symétriquement par rapport à l'axe transversal en deux parties de contact à droite et à gauche de celui-ci sur l'axe longitudinal et/ou dans une partie de bord inférieure de la garniture (3, 3') de frein et diminue un couple de basculement produit par un dispositif (22) d'écartement.

22. Jeu de garnitures de frein d'un frein (10) à disque suivant l'une des revendications 1 à 10, comportant au moins deux garnitures (3, 3') de frein ayant chacune une plaque (4) de support de garniture et une garniture (5) de frein, qui est mise sur la plaque (4) de support de garniture,
dans lequel au moins l'une des garnitures (3, 3') de frein est pourvue d'au moins un élément (17) de rappel,
dans lequel le au moins un élément (17) de rappel est mis sur une face (4b) de poussée d'une plaque (4) de support de garniture de la garniture (3, 3') de frein,
dans lequel le au moins un élément (17) de rappel est mis par des bras (17b) de fixation sur la plaque (4) de support de garniture de la garniture (3, 3') de frein centralement, sur une partie de bord supérieure, inférieure ou/et latérale de la plaque (4) de support de garniture,
**caractérisé en ce que**
le au moins un élément (17) de rappel est mis centralement sur la plaque (4) de support de garniture d'une garniture (3) de frein du côté du serrage sur la face (4b) de pression, de manière à ce que des extrémités (17c) de fixation de bras (17b) supérieurs de fixation enserrent une face (4c) supérieure de la plaque (4) de support de garniture, et de manière à ce que des extrémités (17c) de fixation de bras (17b) inférieurs de fixation enserrent une face (4c) inférieure de la plaque (4) de support de garniture, le au moins un élément (17) de rappel étant mis en tant qu'une sorte de crampon sur la garniture (3) de frein du côté du serrage.

23. Jeu de garnitures de frein suivant la revendication 22,
**caractérisé en ce que**
le jeu de garnitures de frein a un collier (25) de maintien, auquel le au moins un élément (17) de rappel peut être relié.

24. Jeu de garnitures de frein d'un frein (10) à disque suivant l'une des revendications 1 à 8, comportant au moins deux garnitures (3, 3') de frein ayant chacune une plaque (4) de support de garniture et une garniture (5) de frein, qui est mise sur la plaque (4) de support de garniture,
dans lequel au moins l'une des garnitures (3, 3') de frein est pourvue d'au moins un élément (18) de rappel,
dans lequel le au moins un élément (18) de rappel est mis sur une face (4b) de poussée d'une plaque (4) de support de garniture de la garniture (3, 3') de frein,
dans lequel le au moins un élément (18) de rappel est mis par des bras (18b) de fixation sur la plaque (4) de support de garniture de la garniture (3, 3') de frein centralement, sur une partie de bord supérieure, inférieure ou/et latérale de la plaque (4) de support de garniture,
**caractérisé en ce que**
une garniture (3') de frein du côté du dos est pourvue du au moins un élément (18) de rappel, dans lequel le au moins un élément (18) de rappel comprend deux bras (18a) de ressort, deux bras (18b) de fixation et une partie (18f) d'appui et est, par respectivement un bras (18b) de fixation mis sur respectivement une partie latérale d'une face (4b) de poussée de la plaque (4) de support de garniture de la garniture (3') de frein du côté du dos, dans lequel les bras (18a) de ressort sont reliés ensemble par leurs extrémités opposées ou sont constitués d'une seule pièce, dans lequel dans sa partie de liaison la partie (18f) d'appui est mise sous la forme d'un étrier en forme de U, dans lequel aux extrémités libres des bras (18a) de ressort est mis respectivement l'un des bras (18b) de fixation et dans lequel les bras (18a) de ressort reliés s'étendent, en une forme correspondant au contour incurvé de la partie de bord inférieur de la face (4b) de poussée de la plaque (4) de support de garniture de la garniture (3') de frein du côté du dos, jusqu'aux extrémités inférieures de la plaque (4) de support de garniture.

25. Jeu de garnitures de frein d'un frein (10) à disque suivant la revendication 9, comportant au moins deux garnitures (3, 3') de frein, pourvues chacune d'une plaque (4) de support de garniture et d'une garniture (5) de friction mise sur la plaque (4) de support de garniture,
dans lequel au moins l'une des garnitures (3, 3') de frein est pourvue d'au moins un élément (18) de rappel,
dans lequel le au moins un élément (18) de rappel est mis sur une face (4b) de poussée d'une plaque (4) de support de garniture de la garniture (3, 3') de frein,
dans lequel le au moins un élément (18) de rappel est mis centralement sur une partie de bord supérieure, inférieure ou/et latérale de la plaque (4) de support de garniture par des bras (18b) de fixation sur la plaque (4) de support de garniture de la garniture (3, 3') de frein,
dans lequel une garniture (3') de frein du côté du dos est pourvue du au moins un élément (18) de rappel, dans lequel le au moins un élément (18) de rappel a au moins deux unités (18') de rappel ayant chacune au moins un bras (18b) de fixation et chacune un bras (18a) de ressort, dans lequel les unités (18') de rappel sont mises chacune sur les parties latérales de la face (4b) de poussée de la plaque (4) de support de garniture de la garniture (3') de frein du côté du dos en étant symétriques par rapport à un axe transversal, radial par rapport à un axe (2a) de rotation du disque (2) de frein associé, de la plaque (4) de support de garniture,
**caractérisé**
**en ce qu'**un bras (18b) respectif de fixation d'une unité (18') respective de rappel s'étend vers le bas parallèlement à l'axe transversal radial de la plaque (4) de support de garniture et est fixé par son extrémité inférieure à peu près au milieu du petit côté de la face (4b) de poussée de la plaque (4) de support de garniture, dans lequel cette extrémité inférieure du bras (18b) de fixation se transforme en un coude dans le bras (18a) de ressort, qui fait saillie de manière inclinée de la face (4b) de poussée et continue à s'étendre vers le bas parallèlement à l'axe transversal radial de la plaque (4) de support de garniture.

26. Jeu de garnitures de frein d'un frein (10) à disque suivant la revendication 9, comportant au moins deux garnitures (3, 3') de frein ayant chacune une plaque (4) de support de garniture et une garniture (5) de friction qui est mise sur la plaque (4) de support de garniture, dans lequel au moins l'une des garnitures (3, 3') de frein est pourvue d'au moins un élément (18) de rappel,
dans lequel le au moins un élément (18) de rappel est mis sur une face (4b) de poussée d'une plaque (4) de support de garniture de la garniture (3, 3') de frein,
dans lequel le au moins un élément (18) de rappel est mis centralement sur une partie de bord supérieure, inférieure ou/et latérale de la plaque (4) de support de garniture par des bras (18b) de fixation sur la plaque (4) de support de garniture de la garniture (3, 3') de frein,
dans lequel une garniture (3') de frein du côté du dos est pourvue du au moins un élément (18) de rappel, dans lequel le au moins un élément (18) de rappel a au moins deux unités (18') de rappel réalisées symétriques comme en miroir, comprenant chacune un bras (18a) de ressort ayant deux jumelles (18h) de ressort parallèles, comprenant un bras (18b) de fixation et comprenant une partie (18f) d'appui, et dans lequel une unité (18') respective de rappel est mise par son bras (18b) de fixation dans l'une des deux parties (4h) de coin inférieur de la plaque (4) de support de garniture de la garniture (3') de frein du côté du dos,
dans lequel, à une extrémité du bras (18b) de fixation est mise, en étant coudée d'environ 90°, une extrémité (18c) de fixation à l'extrémité libre de laquelle est formée une partie (18d) d'extrémité également coudée à 90°,
dans lequel, à l'autre extrémité du bras (18b) de fixation, fait saillie de la face (4b) de poussée de la plaque (4) de support de garniture, une partie (18i) de liaison coudée à 90°, qui est reliée à son autre extrémité à une première jumelle (18h) de ressort, coudée vers l'extérieur à 90°, du bras (18a) de ressort,
**caractérisé en ce que**
parallèlement à la première jumelle(18h) de ressort, est disposée une autre deuxième jumelle (18h) de ressort, qui, par son extrémité extérieure, est reliée à l'extrémité extérieure de la première jumelle (18h) de ressort, dans lequel l'extrémité intérieure de cette deuxième jumelle (18h) de ressort est reliée à une partie (18j) de liaison à angle droit, en saillie en s'écartant de la face (4b) de poussée de la plaque (4) de support de garniture, dans lequel la partie (18j) de liaison est tordue autour de son axe longitudinal et se transforme à son extrémité en une partie (18f) d'appui, en forme de crochet, tournée vers le bas et s'étendant parallèlement à un axe transversal radial de la plaque (4) de support de garniture.

27. Jeu de garnitures de frein suivant l'une des revendications 22 à 26,
**caractérisé en ce que**
le jeu de garnitures de frein a en outre un dispositif (22) d'écartement ayant un collier (25) de maintien.
